# EUROPÄISCHE PATENTSCHRIFT

(11) **EP 2 292 679 B1**
(45) Veröffentlichungstag und Bekanntmachung des Hinweises auf die Patenterteilung: **11.03.2020**
(21) Anmeldenummer: 09169786.2
(22) Anmeldetag: 08.09.2009
(51) Int. Cl.: C08G 71/02, C25D 3/22, C25D 3/56

(54) **Polymere mit Aminoendgruppen und deren Verwendung als Additive für galvanische Zink- und Zinklegierungsbäder**
Polymers with amino end groups and their use as additives for galvanic zinc and zinc alloy baths
Polymères dotés de groupes terminaux aminés et leur utilisation comme additifs pour bains galvaniques de zinc et d'alliages de zinc

(43) Veröffentlichungstag der Anmeldung: 09.03.2011
(73) Patentinhaber: Atotech Deutschland GmbH, 10553 Berlin (DE)
(72) Erfinder: Brunner, Heiko, 10247, Berlin (DE); Kohlmann, Lars, 12109, Berlin (DE); Habig, Ellen, 10553, Berlin (DE); Dingwerth, Björn, 14129 Berlin (DE); Bedrnik, Lukas, Tanvald 468 41 (CZ)
(74) Vertreter: Beckmann, Claus

(56) Entgegenhaltungen:
- EP-A2- 1 201 789
- WO-A1-2007/025606
- DE-A1-102005 060 030
- US-A- 4 157 388

## Beschreibung

### Gebiet der Erfindung

Die Erfindung betrifft Additive für Elektrolytbäder zur galvanischen Abscheidung einer Zink- oder Zinklegierungsschicht. Bei den Additiven handelt es sich um Polymere mit Aminoendgruppen. Die Additive bewirken insbesondere nur eine geringe Blasenbildung und nur geringe Abbrennungen sowie eine gleichmäßige Schichtdickenverteilung bei der galvanischen Abscheidung von Zink- oder Zinklegierungsschichten.

### Hintergrund der Erfindung

N,N'-Bis(dialkylaminoalkyl)harnstoff-α,ω-dihalogenalkyl-Copolymere haben seit vielen Jahren eine breite Anwendung als Additive in galvanischen Bädern gefunden. Dies Verbindungen werden insbesondere als Kornverfeinerer in alkalischen Zinkelektrolyten eingesetzt.

Die Dokumente US 5,405,523, US 5,435,898 und WO 2004/044269 A2 beschreiben die Verwendung eines N,N'-Bis(dialkylaminoalkyl)harnstoff-α,ω-dichlor-diethylether-Copolymeren in alkalischen Zink- und Zinklegierungselektrolyten.

Das Dokument EP 1 114 206 B1 beschreibt eine Formulierung bestehend aus N,N'-Bis(dialkylaminoalkyl)harnstoff-α,ω-dihalogenalkyl-Copolymeren und quaternisierten Pyridin-3-carbonsäuren und einem aromatischen Aldehyd, die sich dadurch auszeichnet, dass die bei Zinkabscheidungen oftmals beschriebenen Blasenbildungen vermieden werden können. Vergleichsexprimente zeigen jedoch, dass auch mit diesen Polymeren - teilweise nach längerer Zeit - eine Blasenbildung auftritt.

Die Dokumente WO 2007/747604 A2 und WO 2007/147605 A2 beschreiben ebenfalls den Einsatz der oben genannten Copolymere als Additive in Kombination mit quaternisierten Nicotinamid- und Tripyridinium-Derivaten in Zink- und Zinklegierungsbädern.

Das Dokument WO 2007/025606 A1 beschreibt die Verwendung von quaternisierten Stickstoffpolymeren, die durch die Reaktion eines Gemisches bestehend aus N-(Dialkylaminoalkyl)-harnstoff und eines N,N'-Bis(dialkylaminoalkyl)-harnstoffs bzw. deren Guanidin- oder Thioharnstoff-Analoga mit einem Dihalogenalkan oder Epichlorhydrin erhalten werden können. Besagte Additive haben Verwendung in der blasenfreien Abscheidung von Zinkschichten aus alkalischen Zinkelektrolyten gefunden.

Oben genannte Copolymere können gemäß dem Dokument US 4,157,388 durch eine 1 : 1 Umsetzung eines N,N'-Bis(dialkylaminoalkyl)harnstoffes mit einem α,ω-Dihalogenalkan gewonnen werden. Durch Zusatz eines geeigneten Alkyllierungsreagenzes, wie z.B. eines Monohalogenalkans oder einer Säure, kann die Polymerisation abgebrochen und somit die Molekulargewichtsverteilung entsprechend der gewünschten Anwendung eingestellt werden.

Trotz der genannten Abbruchmöglichkeit ist die Reaktionssteuerung hinsichtlich der Polymerzusammensetzung gerade im großtechnischen Prozess äußerst schwierig und kann zu schwer reproduzierbaren Produktgemischen führen. Dies kann je nach Applikation zu großen Prozess- und Produktschwankungen führen. So ist bekannt, dass gerade in galvanischen Prozessen die Molekulargewichtsverteilung von Polymeren einen nicht unerheblichen Einfluss auf die Performance der Elektrolyte hinsichtlich der Schichteigenschaften hat. So werden mit oben aufgeführten polymeren Additiven, wie sie z.B. in den Dokumenten US 5,405,523, US 5,435,898 und WO 2004/044269 A2 beschrieben sind, oftmals Zinkschichten erhalten, die nach geraumer Zeit zur Blasenbildung neigen. Ferner enthalten die auf diese Weise hergestellten Copolymere häufig noch ein organisch gebundenes Halogen, was je nach Elektrolyt eine AOX-Belastung bedingt. Weiterhin können mit dem in dem Dokument US 4,157388 beschriebenen Herstellverfahrens keinerlei gemischten Copolymeren oder Oligomere enthaltend unterschiedliche Dihalogenverbindungen oder Diaminokomponenten in alternierender Reihenfolge hergestellt werden.

Die Dokumente US 2008/0223726 A1 und EP 1 315 849 B1 beschreiben die Herstellung und Verwendung gemischter Polymere als Additive für Zink- und Zinklegierungselektrolyte, die durch eine Mehrkomponenten-Polymerisation hergestellt werden können. Dabei werden neben den N,N'-Bis(dialkylaminoalkyl)harnstoff-Derivaten (vor allem Harnstoff-, Thioharnstoff- und Guanidin-Derivaten) oftmals weitere Amine bzw. Polyamine oder heterocyclische Verbindungen, wie z.B. Imidazol eingesetzt. Dabei beträgt das Verhältnis Amin-Komponente zu Halogenkomponenten bevorzugt 1 : 1. Durch den in beiden Dokumenten beschriebenen Herstellungsprozess kommt es jedoch oftmals zu einer willkürlichen Verteilung der Reaktionskomponenten und zur Bildung von Polymeren mit Molekulargewichten, die nachteilig für die Qualität der abgeschiedenen Metallschicht sind. Je nach den angewandten Reaktionsbedingungen, wie z.B. Reaktionszeiten, Aufheizraten, Reaktorgeometrien, Volumen-Oberflächen-Verhältnissen etc., kann es zu schwer reproduzierbaren Produktzusammensetzungen und somit Additiveigenschaften kommen, die einen erheblichen Einfluss auf die Abscheideergebnisse haben. Die Herstellung sogenannter Taylor-made Polymere und somit eine gezielte Einstellung der abzuscheidenden Schicht je nach Applikationszweck ist somit erschwert.

Das Dokument US 2008/0223726 A1 beschreibt den positivem Einfluss von N,N'-Bis(dialkylaminoalkyl)guanidin-Derivaten auf den Glanzgrad der abgeschiedenen Zinkschichten bei alkalischen Zinkelektrolyten. Nachteilig bei diesen Derivaten ist, dass der höhere Glanzgrad oftmals mit einer schlechteren Streuung der Abscheidung erkauft wird, was gerade bei Trommelgalvanisierungen einen nicht unerheblichen Nachteil darstellt.

Bedingt durch das Herstellverfahren enthalten die oben genannten (kationischen) Copolymere oftmals Halogenid-Ionen als Gegenionen. Bei Verwendung von N,N'-Bis(dialkylaminoalkyl)thioharnstoff-Derivaten werden bei der Polymerisation oftmals Thioronium-Verbindungen erhalten, die einen negativen Einfluss auf Zinkabscheidungen haben, da diese gerade in alkalischen Medien eine schlechte Beständigkeit aufweisen und sich zersetzen.

Ein weiterer Nachteil der oben genannten Additive und der korrespondierenden Elektrolyte ist das Auftreten starker Anbrennungen im hohen Stromdichtebereich bei Zink-reichen Elektrolyten (>10 g/L Zinkgehalt).

Die EP 1 201 789 A2 beschreibt ein wässriges Galvanisierbad zur galvanischen Abscheidung von Zinn-Zink-Legierungen, umfassend mindestens ein Bad-lösliches Zinnsalz, mindestens ein Bad-lösliches Zinksalz und ein quartäres Ammoniumpolymer, ausgewählt aus einem quaternären Ureylen-Ammoniumpolymer, einem quaternären Iminourylen-Ammoniumpolymer oder einem quaternären Thiourylen-Ammoniumpolymer. Das Bad kann auch einen oder mehrere der folgenden Zusätze enthalten: Hydroxypolycarbonsäuren oder Salze davon, wie Zitronensäure; Ammoniumsalze; Leitsalze; aromatische carbonylhaltige Verbindungen; Polymere von aliphatischen Aminen, wie ein Poly(alkylenimin); und Hydroxyalkyl-substituierte Diamine als Metallkomplexbildner. Das Bad scheidet eine helle und ebene Abscheidung ab und kann angepasst werden, um plattierte Legierungen mit hoher Zinnkonzentration über einen breiten Stromdichtebereich bereitzustellen.

Die DE 10 2005 060030 A1 beschreibt Polymere, die aus zumindest teilweise quervernetzten Hauptketten aufgebaut aus Wiederholeinheiten der folgenden allgemeinen Formel I und gegebenenfalls Wiederholeinheiten aus fünf- oder sechsgliedrigen Azaaromaten oder stickstoffhaltigen Heterocyclen bestehen. Derartige Polymere finden als Additiv in Galvanisierungsbädern Verwendung, da diese eine bessere Schichtdickenverteilung der galvanischen Schicht ermöglichen.

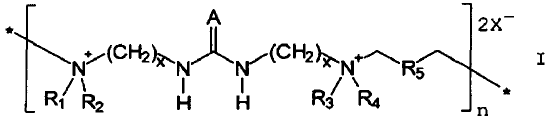

### Beschreibung der Erfindung

Der Erfindung liegt somit die Aufgabe zugrunde, Elektrolytbäder zur galvanischen Abscheidung einer Zink- oder Zinklegierungsschicht bereitzustellen, bei denen die oben genannten Nachteile nicht auftreten.

Die erfindungsgemäßen Elektrolytbäder sollen insbesondere möglichst weitgehend blasen- und anbrennungsfreie Zink- und Zinklegierungsschichten mit möglichst gleichmäßiger Schichtdickenverteilung und hohem Glanz ergeben.

Diese Aufgabe wird erfindungsgemäß gelöst durch ein Elektrolytbad zur galvanischen Abscheidung einer Zink- oder Zinklegierungsschicht, wobei das Elektrolytbad ein Polymer der folgenden Formel I enthält,

A-[-L-A-]ₙ-L-A (I)

wobei A für eine Einheit steht, die abgeleitet ist von einer Diaminoverbindung einer der folgenden Formeln II bis VII 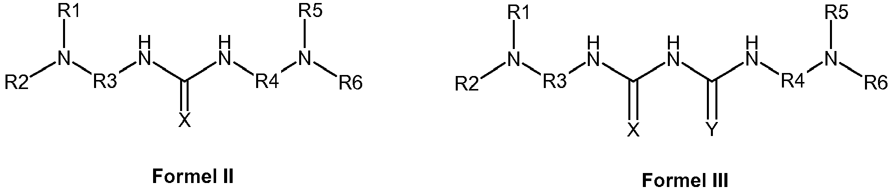 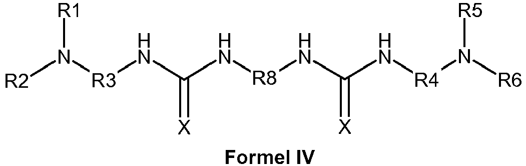 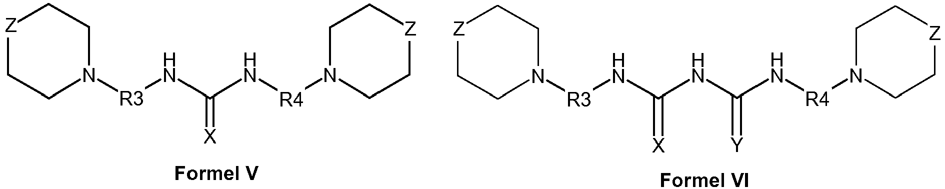 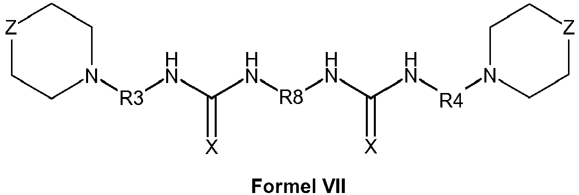
wobei
   X und Y jeweils gleich oder verschieden sein können und für O oder NR stehen, wobei R für H oder C₁-C₆-Alkyl steht,
   Z jeweils gleich oder verschieden sein kann und für O oder S steht,
   R1, R2, R5, und R6 jeweils gleich oder verschieden sein können und für einen substituierten oder unsubstituierten Kohlenwasserstoffrest mit 1 bis 10 Kohlenstoffatomen, bevorzugt Methyl, Ethyl, Hydroxyethyl oder -CH₂CH₂(OCH₂CH₂)_{y}-OH, wobei y zwischen 0 und 4 liegt, stehen, und
   R3, R4, R8 jeweils gleich oder verschieden sein können und für (CH₂)ₚ, wobei p für eine ganze Zahl von 2 bis 12 steht, bevorzugt für eine Ethylen- oder eine Propylengruppe, oder für eine -[CH₂CH₂O]ₙ-CH₂CH₂-Gruppe, wobei n zwischen 1 und 40 liegt, bevorzugt für eine -(CH₂)₂-O-(CH₂)₂- oder -(CH₂)₂-O-(CH₂)₂-O-(CH₂)₂-Gruppe, stehen,
wobei L für einen zweiwertigen Rest steht, der ausgewählt ist aus der Gruppe bestehend aus
   -(CH₂)ₚ-, wobei p zwischen 1 und 12, bevorzugt zwischen 1 und 6 und besonders bevorzugt zwischen 2 und 4, liegt,
   -CH₂-CH(OH)-CH₂- und -[CH₂CH₂O]_{q}-CH₂CH₂-, wobei q zwischen 1 und 40 liegt, bevorzugt -(CH₂)₂-O-(CH₂)₂- oder -(CH₂)₂-O-(CH₂)₂-O-(CH₂)₂-;
wobei die einzelnen Einheiten A gleich oder verschieden sein können,
wobei die einzelnen Reste L gleich oder verschieden sein können,
wobei n für eine ganze Zahl steht und n > 0, bevorzugt > 3, mehr bevorzugt > 5, noch mehr bevorzugt > 10, ist, und
wobei die Polymerkette an beiden Enden Einheiten A aufweist, und
wobei das Polymer erhältlich ist durch Umsetzen einer oder mehrerer Diaminoverbindungen der Formeln II bis VII mit einer oder mehreren Verbindungen der folgenden Formel VIII,

   P-L-Q (VIII)

   wobei L die gleiche Bedeutung hat wie in Formel I hat und wobei P und Q jeweils gleich oder verschieden sein können und für Halogene wie Cl, Br und I oder OMs (Mesylat), OTf (Triflat), ONf (Nonaflat), oder OTs (Tosylat) stehen, und
   wobei das Verhältnis (n_{A} : n_{B}) der insgesamt eingesetzten Stoffmenge der Verbindung(en) der Formeln II bis VII (n_{A}) zur insgesamt eingesetzten Stoffmenge der Verbindung(en) der Formel VIII (n_{B}) mindestens 1,1 : 1 beträgt.

R1, R2, R5, und R6 können, wie erwähnt, für einen substituierten oder unsubstituierten Kohlenwasserstoffrest mit 1 bis 10 Kohlenstoffatomen, bevorzugt Methyl, Ethyl, Hydroxyethyl oder -CH₂CH₂(OCH₂CH₂)_{y}-OH, wobei y zwischen 0 und 4 liegt, stehen. Die genannten Kohlenwasserstoffreste können dabei insbesondere substituiert sein mit C₁-C₆-Alkyl (bevorzugt -CH₃, -CH₂CH₃), Aryl (bevorzugt Phenyl) oder Aralkyl (bevorzugt Benzyl).

Der Ausdruck "Polymer" ist im Zusammenhang mit der vorliegenden Erfindung im weitesten Sinn zu verstehen. Er umfasst jede Verbindung, die durch Reaktion von mindestens zwei Monomer-Molekülen entsteht. Des Ausdruck "Polymer" umfasst somit insbesondere Verbindungen, die typischerweise auch als Oligomere bezeichnet werden. Der Ausdruck "Polymer" wird im Zusammenhang mit der vorliegenden Erfindung auch auf Verbindungen angewendet, die durch eine Poly-"Kondensations"-Reaktion entstehen.

Das Polymer der Formel I ist erhältlich durch Umsetzen einer oder mehrerer Diaminoverbindungen der Formeln II bis VII mit einer oder mehreren Verbindungen der folgenden Formel VIII,

P-L-Q (VIII)

wobei L die gleiche Bedeutung hat wie in Formel I hat und wobei P und Q jeweils gleich oder verschieden sein können und für Halogene wie Cl, Br und I oder für die Pseudohalogene OMs (Mesylat), OTf (Triflat), ONf (Nonaflat), oder OTs (Tosylat) stehen, und wobei das Verhältnis (n_{A} : n_{B}) der insgesamt eingesetzten Stoffmenge der Verbindung(en) der Formeln II bis VII (n_{A}) zur insgesamt eingesetzten Stoffmenge der Verbindung(en) der Formel VIII (n_{B}) mindestens 1,1 : 1, bevorzugt mindestens 1,3 : 1, mehr bevorzugt mindestens 1,5 : 1, beträgt.

Bei den Verbindungen der Formel VIII handelt es sich um organische Di(pseudo)halogenVerbindungen.

Das heißt, bei der Herstellung der Polymere der Formel I wird die Di(pseudo)halogen-Komponente der Formel VIII bezogen auf die Diamino-Komponente(n) der Formeln II bis VII im stöchiometrischen Unterschuss eingesetzt. Dadurch wird bewirkt, dass die Kette des Polymers der Formel I der an beiden Enden Einheiten A mit Aminogruppen aufweist. Diese terminalen Aminogruppen sind (wie in den Verbindungen der Formeln II bis VII) zunächst tertiär, können jedoch quaternisiert werden. In saurer Lösung liegen die Aminogruppen ganz oder teilweise protoniert vor.

Die Verknüpfungen zwischen den Einheiten A und den Resten L erfolgt über quaternäre Ammonium-Gruppen, die durch Substitution der Gruppen P und Q in den Verbindungen der Formeln VIII durch die tertiären Aminogruppen der Verbindungen der Formeln II bis VII gebildet werden.

Diese terminalen tertiären Aminogruppen können je nach gewünschten Eigenschaften durch Verwendung eines organischen Monohalogenides, wie z.B. Benzylchlorid, Allylchlorid, Alkylchlorid oder deren korrespondierenden Bromiden, oder durch Verwendung einer geeigneten Mineralsäure, wie z.B. Salzsäure, Bromwasserstoffsäure, lodwasserstoffsäure oder Schwefelsäure, quaternisiert werden.

Das Polymer der Formel I hat bevorzugt ein Molekulargewicht von mindestens 500 (g/mol).

Die Umsetzung der Diaminoverbindungen der Formeln II bis VII mit den Verbindungen der Formel VIII kann vorzugsweise in wässriger bzw. wässrig-alkoholischer Lösung oder lösemittelfrei in Substanz bei Temperaturen von vorzugsweise 20 bis 100 °C durchgeführt werden.

Die Polymere der Formel I weisen nach beendeter Umsetzung keinerlei organisch gebundenes Halogen auf.

Bevorzugt werden zu den Polymeren der Formel I bei Verwendung als Additive für Elektrolytbäder Halogenid-Ionen zugegeben. Die Halogenid-Ionenzugabe kann dabei durch Zugabe der korrespondierenden Mineralsäuren, insbesondere Salzsäure, oder durch Quaternisierung der endständigen tertiären Aminofunktionalitäten mit entsprechenden Alkylhalogeniden oder durch Zugabe von Alkalimetall-, Erdalkalimetall-, Zink- oder Ammoniumhalogeniden erfolgen. Dabei können als Ammoniumhalogenide neben den unsubstituierten Ammoniumhalogeniden auch Alkylammoniumhalogenide, wie z.B. Tetraalkylammoniumchlorid, oder Ammoniumsalze, wie sie beispielsweise in dem Dokument US 3,960,677 beschrieben sind, eingesetzt werden. Bevorzugt wird das Polymer der Formel I mit Salzsäure angesäuert. Bevorzugt werden ca. 2 Äquivalente Salzsäure pro Äquivalent Polymer zugegeben.

Überraschend wurde gefunden, dass die Abscheideergebnisse durch die Halogenidlonenzugabe verbessert werden können. Insbesondere können die Streuung des Elektrolyten und die Tendenz zur Anbrennung verringert werden. Außerdem wird durch die Halogenid-Ionenzugabe eine Erhöhung der Stromausbeute im niedrigen Stromdichtebereich erreicht. Des weiteren ist durch die Zugabe von Halogenid-Ionen eine Variation des Glanzgrades möglich.

Die Polymere der Formel I können gezielt und reproduzierbar je nach dem gewünschtem Anwendungszweck hergestellt werden. Besonders vorteilhaft ist die Möglichkeit zum Aufbau von Taylor-made Blockpolymeren. Diese können durch gezielte Kombination verschiedenartiger Dimer, Trimer bzw. Oligomere durch Verknüpfung mit einem oder mehreren Dihalogenide konsekutiv aufgebaut werden. Die Polymere der Formel I können insbesondere durch konsekutive Verknüpfung verschiedener Oligomer-Bausteinen, wie z.B. Dimere und/oder Trimeren mit einem oder mehreren Dihalogeniden und -pseudohalogeniden der Formel VIII Segment-kontrolliert aufgebaut werden.

Verbindungen der Formeln II und V werden im Fall der Diaminoharnstoffe in dem Dokument JP 04-198160 und im Fall der Diaminoguanidine in dem Dokument DE 30 03978 A1 beschrieben. Die Verbindungen der Formeln III und VI können durch Umsetzung der entsprechenden Diamine mit Natriumdicyanamid erhalten werden. Umsetzungen dieser Art können analog den Umsetzungen, wie sie unter anderem in dem Dokument US 4183958A beschrieben sind, vorgenommen werden. Verbindungen der Formeln IV und VII können durch Umsetzungen der entsprechenden Dicarbonsäurehalogenide mit den entsprechenden Diaminen erhalten werden. Verbindungen der Formel VII sind an sich bekannt und oftmals kommerziell erhältlich. Polymere der Formel I, die aus Verbindungen der Formel III abgeleitete Einheiten A enthalten, sind hingegen neu und werden durch die vorliegende Erfindung erstmals bereitgestellt.

Die Polymere der Formel I können in verschiedenen Zink- und Zinklegierungsbädern eingesetzt werden, die nachfolgend näher beschrieben werden. Das erfindungsgemäße Elektrolytbad kann somit eine saures oder ein alkalisches Zink- oder Zinklegierungsbad sein. Bevorzugt ist das erfindungsgemäße Elektrolytbad cyanidfrei.

Das Polymer der Formel I ist in dem erfindungsgemäßen Bad bevorzugt in einer Menge von 0,01 bis 50 g/L, vorzugsweise 0,25 bis 10 g/L enthalten. Das Bad kann eine Kombination verschiedener Polymere der Formel I enthalten.

Cyanidfreie Zinkelektrolyte sowie deren Legierungsbäder lassen sich in zwei Typen einteilen, nämlich in schwach saure Zinkelektrolyte (enthaltend Zinkchlorid bzw. Zinksulfat) und alkalische Zinkelektrolyte. Aus schwach sauren Zinkbädern wird eine gleichmäßig glänzende Zinkschicht abgeschieden, jedoch haben diese den Nachteil, dass ihre Stromausbeute über einen breiten Stromdichtebereich immer 100% beträgt. Bei Werkstücken, die eine einfache Form besitzen, mag dies positiv zu bewerten sein, da der Strom ausschließlich zur Zinkabscheidung verbraucht wird, jedoch führt dies bei Werkstücken, die eine komplexe Geometrie besitzen, zu einer dicken Zinkschicht im hohen Stromdichtebereich und zu sehr dünnen Zinkschichten im niedrigen Stromdichtebereich.

Das Verhältnis von Zinkschichtdicke im hohen Stromdichtebereich zur Zinkschichtdicke im niedrigen Stromdichtebereich wird als Schichtdickenverteilung (Streuungskoeffizient) bezeichnet und sollte im Idealfall 1 betragen. Technisch-funktional gesehen sollte eine Zinkschicht auf dem zu beschichtenden Werkstück überall die gleiche oder annähernd gleiche Schichtdicke bei hohem Glanz aufweisen.

Eine gute Schichtdickenverteilung kann durch das Senken der Stromausbeute im hohen Stromdichtebereich erreicht werden, während die Stromausbeute im niedrigen Stromdichtebereich aufrechterhalten bleibt. Diese Art des Angleichens der Zinkschichtdicke über einen breiten Stromdichtebereich ist bisher bei der Zinkabscheidung aus alkalischen, cyanidfreien Elektrolyten gelungen.

Es wurde nun gefunden, dass durch Einsatz von Polymeren der Formel I mit geeigneter Kettenlänge, die sich ohne Weiteres einstellen lässt, die Schichteigenschaften der abgeschiedenen Schichten einstellen und blasen- und anbrennungsfreie Zink- und Zinklegierungsschichten erhalten werden können.

### Alkalische Elektrolytbäder

Der Einsatz der erfindungsgemäßen Verbindungen gemäß der Formel I erfolgt in einer Ausführungsform in alkalischen galvanischen Bädern. Alkalische Zinkgalvanisierbäder sind allgemein auf Basis einer wässrigen Lösung von Zinkationen in Gegenwart von Alkalimetallhydroxiden aufgebaut. Die Dokumente DE 25 25 264 und US 3,884,774 beschreiben derartige Elektrolyte, jedoch weisen die damit erhaltenen Zinkschichten keine gleichmäßige Schichtdickenverteilung auf. Solche Bädern enthalten eine anorganische alkalische Komponente, vorzugsweise ein Hydroxid eines Alkalimetalls und besonders bevorzugt Natriumhydroxid, Kaliumhydroxid und/oder Lithiumhydroxid, um in dem Bad einen pH-Wert von mindestens 10 und vorzugsweise von mindestens 11 einzustellen. Hierbei können Mengen von 50 bis etwas 250 g/L und besonders bevorzugt von 90 bis 130 g/L der alkalischen Komponente eingesetzt werden.

Die erfindungsgemäßen Elektrolytbäder enthalten gewöhnlich Zink-Ionen in Konzentrationen, die von etwa 0,1 bis etwa 100 g/L reichen, wobei Konzentrationen von 4 bis 30 g/L bevorzugt sind. Das Zink-Ion kann in dem erfindungsgemäßen Bad in Form eines löslichen Salzes, zum Beispiel Zinkoxid, Zinksulfat, Zinkcarbonat, Zinkacetat, Zinksulfamat, Zinkhydroxid, Zinktartrat, vorliegen.

Als Legierungsmetall können die erfindungsgemäßen Bäder etwa 0,1 bis 50 g/L Metallionen enthalten. Geeignete Legierungsmetallsalze sind Hydroxide, Sulfate, Carbonate, Ammoniumsulfate, Sulfamate, Acetate, Formiate und Halogenide, bevorzugt Chlorid und Bromid. Als geeignete Legierungsmetalle kommen vorzugsweise Cobalt, Nickel, Mangan und/oder Eisen in Betracht. Die Konzentration der Legierungsmetallionen in den erfindungsgemäßen Bädern kann innerhalb eines weiten Bereiches variieren und beträgt zwischen 0,01 und 100 g/L. Da bei unterschiedlichen Legierungstypen auch ein unterschiedlicher Legierungsanteil erforderlich ist, um beispielsweise den Korrosionsschutz zu verbessern, ist diese Konzentration von Metallion zu Metallion verschieden.

Bevorzugt enthalten die erfindungsgemäßen Bäder als Legierungsmetall etwa 0,1 bis 50 g/L Nickel-Ionen. Geeignete Nickelsalze sind Nickelhydroxid, Nickelsulfat, Nickelcarbonat, Ammonium-Nickelsulfat, Nickelsulfamat, Nickelacetat, Nickelformiat und Nickelhalogenide.

In einer bevorzugten Ausführungsform enthält das Elektrolytbad Zink in einer Menge von 0,1 bis 30 g/L und Cobalt in einer Menge von 10 bis 120 mg/L, Nickel in einer Menge von 0,3 bis 3 g/L, Mangan in einer Menge von 10 bis 100 g/L und/oder Eisen in einer Menge von 10 mg/L bis 30 g/L.

Als Glanzbildner können neben den Polymeren der Formel I zum einen Pyridiniumderivate, z.B. der Nicotinsäure oder des Nicotinamids, wie sie zum Beispiel in dem Dokument US 6,652,728 beschrieben werden, eingesetzt werden.

Wenn die erfindungsgemäßen Bäder die oben genannten zusätzlichen Metallionen enthalten, dann ist es zweckmäßig, den Bädern auch auf diese zusätzlichen Metallionen abgestimmte Komplexbildner zuzusetzen, um die Abscheidepotentiale zu steuern und um eine Coreduktion mit den vorhandenen Zinkionen zu ermöglichen. Als solche Komplexbildner werden Chelatbildner bevorzugt. Beispiele für geeignete Komplexierungsreagenzien sind Hydroxycarboxylate, wie z.B. Natriumgluconat, Aminoalkohole, wie z.B. Triethanolamin, Polyamine, wie z.B. Polyethylendiamin, Aminocarboxylate, wie EDTA oder Trilon M, Aminophosponate, wie Amino-tris(methylenphosphonsäure), und mehrwertige Alkohole, wie z.B. Sorbit oder Saccharose. Die Komplexierungsreagenzien können einzeln oder im Gemisch in den erfindungsgemäßen Bädern enthalten sein, wobei dessen Menge vorzugsweise im Bereich von 2 bis 200 g/L liegt.

Weiterhin können die erfindungsgemäßen Bäder bekannte Einebner, wie 3-Mercapto-1,2,4-triazol und/oder Thioharnstoff enthalten. Die Konzentration des Einebner ist die übliche Konzentration von Zinkbädern und beträgt beispielsweise 0,01 bis 0,50 g/L. Weitere Zusätze für die erfindungsgemäßen Bäder sind aromatische Aldehyde oder deren Bisulfitaddukte.

Bevorzugte aromatische Aldehyde sind 4-Hydroxy-benzaldehyd, 4-Hydroxy-3-methoxybenzaldehyd, 3,4-Dimethoxy-benzaldehyd, 3,4-Methylendioxy-benzaldehyd, 2-Hydroxybenzaldehyd und deren Gemische. Diese Additive, deren Konzentration im Bereich von 0,005 bis 1,0 g/L, vorzugsweise von 0,01 bis 0,50 g/L liegt, wirken in an sich bekannter Weise als Glanzbildner.

Weiterhin kann das erfindungsgemäße Bad als Glanzbildner auch andere Substanzen, ausgewählt aus der Gruppe Schwefelverbindungen, Aldehyde, Ketone, Amine, Polyvinylalkohol, Polyvinylpyrrolidon, Proteine oder Reaktionsprodukte von Halogenhydrinen mit aliphatischen Aminen, Polyaminen oder heterocyclischen Stickstoffverbindungen und Gemische davon enthalten.

Ferner können die erfindungsgemäßen Bäder noch wasserenthärtende Mittel enthalten, die durch derartige Zusätze die Empfindlichkeit des erfindungsgemäßen Elektrolyten gegenüber Fremdmetallionen, insbesondere Calcium und Magnesium aus Leitungswasser, verringert wird. Beispiele für derartige wasserenthärtende Mittel sind EDTA, Natriumsilicat und Weinsäure.

Die erfindungsgemäßen Bäder scheiden eine blanke, ebene und duktile Zink- oder Zinklegierungs-Schicht bei jeder gebräuchlichen Temperatur von etwa 15 °C bis 50 °C, vorzugsweise 20 °C bis 30 °C, besonders bevorzugt etwa 25 °C ab. Bei diesen Temperaturen sind die erfindungsgemäßen Bäder stabil und über einen weiten Stromdichtebereich von 0,01 bis 10 A/dm², besonders bevorzugt von 0,5 bis 4 A/dm², wirkungsvoll.

Wie die Beispiele 12 und 13 (Tabelle 3) zeigen, zeigen die Polymere der Formel I überraschenderweise auch sehr positive Effekte bei alkalischen Zink-Nickel-Abscheidungen.

### Saure Elektrolytbäder

Der Einsatz der erfindungsgemäßen Verbindungen gemäß der Formel I erfolgt in einer weiteren Ausführungsform in sauren galvanischen Bädern.

Herkömmliche saure Zinkbäder weisen je nach Prozessart häufig Anbrennungen auf. Durch den Einsatz der Polymere der Formel I kann dieser Nachteil überwunden werden. Diese zeigen die Beispiele 14 bis 22 (Tabelle 4).

Das erfindungsgemäße saure Bad enthält Zink-Ionen in einer Konzentration von etwa 0,2 bis 80 g/L, bevorzugt 10 bis 50 g/L.

Die erfindungsgemäßen sauren Zink- und Zinklegierungselektrolyten können ein oder mehrere Salze zur Erhöhung der Leitfähigkeit wie z.B. Natriumchlorid, Natriumsulfat, Natriumfluorid, Kaliumchlorid, Kaliumfluorid, Kaliumsulfat, Ammoniumchlorid, Ammoniumfluorid und/oder Ammoniumsulfat in einer Menge von 50 bis 300 g/L oder mehr enthalten.

In einigen Fällen können die erfindungsgemäßen Zinn-Zink-Elektrolyte auch ein oder mehrere im Stand der Technik bekannte Glanzbildner enthalten. Gemäß einer Ausführungsform enthalten die Bäder mindestens einen weiteren Glanzbildner, ausgewählt aus aromatischen Carbonylverbindungen. Die aromatischen Carbonylverbindungen wirken als ein Glanzbildner, der über einen weiten Stromdichtebereich eine optimale Einebnungs- und Glanzwirkung verleiht. Die aromatischen Carbonylverbindungen können aromatische Aldehyde, Acetophenone und Carbonylverbindungen sein.

Beispiele für einen aromatischen Aldehyden schließen Benzaldehyd, o-Chlorbenzaldehyd, m-Chlorbenzaldehyd, p-Chlorbenzaldehyd, o-Hydroxybenzaldehyd, m-Hydroxybenzaldehyd, p-Hydroxybenzaldehyd, o-Aminobenzaldehyd, Verataldehyd, 2,4-Dichlorbenzaldehyd, 3,4-Dichlorbenzaldehyd, 3,5-Dichlorbenzaldehyd, 2,6-Dichlorbenzaldehyd, Tolualdehyd, 3,4-Dimethoxybenzaldehyd, Cinnamaldehyd, Anisaldehyd, 1-Naphthaldehyd, 2-Naphthaldehyd, 2-Methoxy-1-naphthaldehyd, 2-Hydroxy-1-naphthaldehyd, 2-Ethoxy-1-naphthaldehyd, 4-Methoxy-1-naphthaldehyd, 4-Ethoxy-1-naphthaldehyd und 4-Hydroxy-1-naphthaldehyd ein. Bei einigen Verbindungen liefert eine Kombination des Naphthaldehyds mit einem Benzaldehyd, beispielsweise 1-Naphthaldehyd mit 2,6-Dichlorbenzaldehyd, eine überlegende Abscheidung auf den Substraten. Beispiele für andere Carbonylverbindungen schließen aromatische Aldehyde und Ketone, wie Benzylidenaceton, Coumarin, Acetophenon, Propiophenon, 3-Methoxybenzacetophenon ein. Weitere Carbonylverbindungen schließen Furfurylidenaceton, 3-Indolcarboxyalehyd und Thiophencarboxyaldehyd ein. Die Menge des in den erfindungsgemäßen Bädern enthaltenen aromatische Aldehyds oder der anderen Carbonyl-enthaltenden Verbindungen liegt im Bereich von bis zu etwa 2 g/L Bad und vorzugsweise von etwa 0,005 bis etwa 2 g/L Bad. Die Glanzbildner werden im Allgemeinen zu den Plattierungsbädern als Bisulfitadditionsprodukte zugesetzt.

Es sind auch Gemische von aliphatischen Aldehyden und den oben beschriebenen aromatischen Aldehyden und Gemische von Naphthaldehyden und Benzaldehyden geeignet. Beispiel für geeignete Kombinationen schließen Folgendes ein: ein Gemisch aus Acetaldehyd und 4-Methoxy-1-naphthaldehyd, ein Gemisch aus Formaldehyd, 1-Naphthaldehyd und 2,6-Dichlorbenzaldehyd etc.

Weitere geeignete aromatische Carboxyl-enthaltende Glanzbildnerverbindungen schließen die aromatischen Carbonsäuren und Salze davon, wie Benzoesäure, Natriumbenzoat, Natriumsalicylat und Nicotinsäure ein.

Der pH-Wert der erfindungsgemäßen sauren Zink- und Zinklegierungsbäder beträgt zwischen 2 bis 7, bevorzugt 4 bis 6.

Die erfindungsgemäßen Bäder scheiden eine blanke, ebene und duktile Zink- oder Zinklegierungsschicht bei jeder gebräuchlichen Temperatur von etwa 15 °C bis 60 °C, vorzugsweise 20 °C bis 45 °C, besonders bevorzugt etwa 25 °C bis 40 °C, ab. Bei diesen Temperaturen sind die erfindungsgemäßen Bäder stabil und über einen weiten Stromdichtebereich von 0,01 bis 20 A/dm², bevorzugt von 0,1 bis 15 A/dm², besonders bevorzugt 0,1 bis 10 A/dm² wirkungsvoll.

Als geeignete Legierungsmetalle kommen vorzugsweise Cobalt, Nickel, Mangan, Zinn und/oder Eisen in Betracht. Die Konzentration der Legierungsmetallionen in den erfindungsgemäßen Bädern kann innerhalb eines weiten Bereiches variieren und beträgt vorzugsweise 0,01 bis 300 g/L. Da bei unterschiedlichen Legierungstypen auch ein unterschiedlicher Legierungsanteil erforderlich ist, um beispielsweise den Korrosionsschutz zu verbessern, ist diese Konzentration von Metallion zu Metallion verschieden.

Bevorzugt enthalten die erfindungsgemäßen sauren Zink-Nickel-Bäder als Legierungsmetall etwa 0,1 bis 110 g/L, bevorzugt 1 bis 35 g/L Nickel-Ionen. Geeignete Nickelsalze sind Nickelsulfat, Nickelcarbonat, Ammonium-Nickelsulfat, Nickelsulfamat, Nickelacetat, Nickelformiat und Nickelhalogenide.

Bevorzugt enthalten die erfindungsgemäßen sauren Zink-Cobalt-Bäder als Legierungsmetall etwa 0,01 bis 10 g/L, Cobalt-Ionen. Im Falle saurer Zink-Eisen-Elektrolyte enthalten die erfindungsgemäßen Elektrolyte 10 bis 60 g/L Eisen-Ionen. Geeignete Eisensalze sind Eisensulfat, Eisenmethansulfonat, Ammonium-Eisensulfat, Eisensulfamat, Eisenacetat, Eisenformiat und Eisenhalogenide.

In einer bevorzugten Ausführungsform enthält das Elektrolytbad Zink in einer Menge von 0,1 bis 30 g/L und Cobalt in einer Menge von 10 mg bis 120 mg/L, Nickel in einer Menge von 0,3 bis 3 g/L, Mangan in einer Menge von 10 bis 100 g/L und/oder Eisen in einer Menge von 10 mg/L bis 30 g/L.

Ferner können die erfindungsgemäßen Polymere der Formel I in sauren Zinn-ZinkLegierungsbädern eingesetzt werden. Im Allgemeinen enthalten die erfindungsgemäßen Zinn-Zink-Legierungsbäder zwischen 0,1 bis 10 g/L, besonders bevorzugt 0,2 bis 6 g/L des Polymeren der Formel I.

Die erfindungsgemäßen Zinn-Zink-Elektrolytbad enthalten bevorzugt Zinn(II)-Ionen in Konzentrationen von etwa 1 g/L bis etwa 100 g/L und die Zink-Ionen in einer Konzentration von etwa 0,2 bis 80 g/L.

Gemäß einer weiteren Ausführungsform enthalten die Elektrolytbäder etwa 5 g/L bis 40 g/L Zinn(II)-Ionen und etwa 5 bis etwa 50 g/L Zinkionen. Durch die gesamte schriftliche Beschreibung der Erfindung können der Bereich und die Verhältnisgrenzen kombiniert und variiert werden.

Das Zinn(II)-Ion kann in der Form eines löslichen Salzes, wie von Zinn(II)-sulfat, Zinn(II)-methansulfonat, Zinn(II)-chlorid, Zinn(II)-fluorid, Zinn(II)-sulfamat, Zinn(II)-acetat, Zinn(II)-oxid etc. vorliegen. Das Zinkion kann in dem Bad in Form von Zinksulfat, Zinkmethansulfonat, Zinksulfamat, Zinkchlorid, Zinkfluorid, Zinkacetat, Zinktetrafluoroborat etc. vorkommen. Gemäß einer Ausführungsform sind sowohl Zinn(II)-Ionen als auch Zinkionen in der Form der Chloridsalze vorhanden.

Die Zusammensetzung der Zinn-Zink-Legierungsabscheidung beinhalten 0 bis 100 Gew.-% Zinn, bevorzugt 20 bis 60 Gew.-% Zinn, besonders bevorzugt 30 bis 50 Gew.-% Zinn.

Die erfindungsgemäßen Zinn-Zink-Legierungselektrolyten können eine oder mehrer Salze zur Erhöhung der Leitfähigkeit wie z.B. Natriumchlorid, Natriumsulfat, Natriumfluorid, Kaliumchlorid, Kaliumfluorid, Kaliumsulfat, Ammoniumchlorid, Ammoniumfluorid und/oder Ammoniumsulfat in einer Menge von 50 bis 300 g/L oder mehr enthalten.

Gemäß einer Ausführungsform sind die Salze zur Erhöhung der Leitfähigkeit Chloride und die eingesetzten Zinn(II)- und Zinksalze sind Zinn(II)chlorid und Zinkchlorid.

Wenn die erfindungsgemäßen Bäder die oben genannten zusätzlichen Metallionen enthalten, dann ist es zweckmäßig, den Bädern auch auf diese zusätzlichen Metallionen abgestimmte Komplexbildner zuzusetzen, um die Abscheidepotentiale zu steuern und um eine Coreduktion mit den vorhandenen Zinkionen zu ermöglichen. Als solche Komplexbildner werden Chelatbildner bevorzugt. Beispiele für geeignete Komplexierungsreagenzien sind Hydroxycarboxylate, wie z.B. Natriumgluconat, Aminoalkohole, wie z.B. Triethanolamin, Polyamine, wie z.B. Polyethylendiamin, Aminocarboxylate, wie EDTA oder Trilon M, Aminophosponate, wie Amino-tris(methylenphosphonsäure), und mehrwertige Alkohole, wie z.B. Sorbit oder Saccharose. Die Komplexierungsreagenzien können einzeln oder im Gemisch in den erfindungsgemäßen Bädern enthalten sein, wobei dessen Menge vorzugsweise im Bereich von 2 bis 200 g/L liegt.

### Verwendung der erfindungsgemäßen Elektrolytbäder

Die erfindungsgemäßen Elektrolytbäder können bei der Anwendung für Massenteile beispielsweise in Trommelgalvanisierverfahren und zur Abscheidung auf größeren Werkstücken in Gestellgalvanisierverfahren eingesetzt werden. Dabei werden Anoden verwendet, die löslich sein können, wie beispielsweise Zinkanoden, die gleichzeitig als Zink-Ionen-Quelle dienen, damit das auf der Kathode abgeschiedene Zink durch Auflösen von Zink an der Anode substituiert wird. Im Rahmen von Legierungsabscheidungen können auch Legierungsanoden bzw. Anoden des Legierungsmetalls und/oder zwei Anoden bestehend aus Zinn und dem Legierungsmetall eingesetzt werden.

Andererseits können auch unlösliche Anoden (z.B. platinierte Titanmischoxid-Anoden) eingesetzt werden, wobei die dem Elektrolyten entzogenen Zink-Ionen und/oder weiteren Metallionen bei Legierungsabscheidungen auf andere Weise wieder zugesetzt werden müssen, z.B. unter Verwendung eines Zinklösebehälters.

Das Abscheidungsverfahren kann unter Lufteinblasung, mit Warenbewegung oder ohne Bewegung, betrieben werden, ohne dass sich hierfür irgendwelche Nachteile für die erhaltenen Überzüge ergeben. Zur Vermeidung bzw. Reduzierung von Oxidationen der zugesetzten Additive kann mit der Trennung der Elektrodenräume bzw. mit der Verwendung von Membrananoden gearbeitet werden.

Als Stromquelle dienen handelsübliche Gleichstromrichter oder Pulsgleichrichter.

### Beispiele

Die nachfolgenden Beispiele erläutern die Erfindung; die Erfindung ist jedoch nicht auf diese beschränkt.

### Herstellungsbeispiel 1

### N,N'-Bis[2-(dimethylamino)ethyl]harnstoff

676,43 mL (5,883 mol) N,N'-Dimethylaminoethylamin und 174,50 g (2,905 mol) Harnstoff wurden suspendiert und langsam auf Rückfluss erhitz, wobei Ammoniak entwich. Die Siedetemperatur lag zu Beginn bei 106 °C und wurde innerhalb von 6 Stunden auf 160 °C gesteigert. Nach Beendigung der Gasentwicklung wurde das Reaktionsgemisch auf Raumtemperatur abgekühlt und das Rohprodukt im Hochvakuum (150 °C bei 0,02 mbar) destilliert.

Es entstanden 557,16 g eines farblosen Feststoffes (94,81% d. Theorie).

### Herstellungsbeispiel 2

### N,N'-Bis[3-(dimethylamino)propyl]harnstoff

In einem Doppelmantelreaktor wurden 3,527 kg (58,72 mol) Harnstoff in 14,963 L (118,91 mol) N,N'-Dimethylaminopropylamin bei Raumtemperatur suspendiert. Anschließend wurde das Reaktionsgemisch innerhalb einer Stunde auf 110 bis 115 °C erhitzt, wobei die Reaktion einsetzte. Das entstehende Ammoniak wurde mittels einer leichten Stickstoffeinblasung ausgetrieben. Die Reaktionstemperatur wurde über einen Zeitraum von 6 Stunden stetig bis auf eine Endtemperatur von 160 °C erhöht und 5 Stunden bis zur Beendigung des Rückflusses gehalten. Anschließend wurde das Reaktionsgemisch auf 80 °C abgekühlt und langsam ein Vakuum angelegt bis ein Enddruck von 38 mbar erreicht war.

Es entstanden 13,406 kg einer klaren viskosen Flüssigkeit (99,10% d. Theorie).

### Herstellungsbeispiel 3

### N,N'-Bis[3-(dimethylamino)propyl]guanidin

In einer 2 L-Dreihalsrührapparatur wurden 250 g (2,617 mol) Guanidinhydrochlorid unter Stickstoffatmosphäre auf 190 °C erhitzt, wobei sich eine glasklare Schmelze bildete. Anschließend wurden innerhalb von 90 Minuten bei 185 °C 200 mL (1,57346 mol) N,N'-Dimethylaminopropylamin zugetropft. Nach beendeter Zugabe wurde auf Raumtemperatur gekühlt. Anschließend wurde das Reaktionsgemisch erneut auf 185 °C erhitzt und weitere 600 mL (4,720 mol) N,N'-Dimethylaminopropylamin wurden innerhalb von 8 Stunden kontinuierlich zugegeben. Nach beendeter Zugabe fiel die Reaktionstemperatur auf 160 °C und das Reaktionsgemisch siedete kräftig. Es wurden weitere 274,45 mL (2,159 mol) N,N'-Dimethylaminopropylamin zügig zugetropft und das Reaktionsgemisch wurde weitere 30 Minuten bei 150 °C gerührt. Anschließend wurde das Rektionsgemisch auf Raumtemperatur gekühlt und mit einer Natronlauge (30 Gew.-%) (438 g (10,96 mol) Natriumhydroxid gelöst in 1022 g Wasser) versetzt und 30 Minuten gerührt. Die obere, organische Phase wurde abgetrennt und die untere Phase verworfen. Die flüchtigen Bestandteile, die in der oberen organischen Phase noch vorhanden waren, wurden bei 150 °C und 12 mbar entfernt und der Rückstand bei 150 °C filtriert. Nach Abkühlen auf Raumtemperatur entstanden 354,45 g eines gelborangen Öls (59,05% d. Theorie).

### Herstellungsbeispiel 4

### N,N'-Bis[2-(dimethylamino)ethyl]biguanidin

17,9 g (0,144 mol) N,N'-Dimethylamino-ethylamin-hydrochlorid wurde in 30 mL Butanol suspendiert und mit 12,8 g (0,144 mol) Natriumdicyanamid versetzt und das Reaktionsgemisch wurde 20 Stunden unter Rückfluss erhitzt. Anschließend wurde der Reaktionsansatz mit Essigsäureethylester verdünnt und der anfallende Feststoff abfiltriert. Das überschüssige Lösemittel wurde im Vakuum entfernt. Der anfallende Feststoff wurde erneut in 100 mL Butanol aufgenommen und mit 11,92 g (135,25 mmol) N,N'-Dimethylamino-ethylamin und 32,29 g (326,96 mmol) konz. Salzsäure (37 Gew.-%) versetzt und erneut 30 Stunden unter Rückfluss erhitzt. Nach beendeter Reaktion wurden 60 mL Methanol zugegeben und das Reaktionsgemisch wurde weitere 20 Stunden bei Raumtemperatur gerührt. Anschließend wurde das Reaktionsgemisch mit 43,58 g (326,95 mmol) einer 30%-igen Natronlauge neutralisiert Das überschüssige Lösemittel wurde im Vakuum entfernt, der Rückstand in Dimethylformamid aufgenommen und das ausgefallene Natriumchlorid abgetrennt. Anschließend wurde das Dimethylformamid im Vakuum abdestilliert und bei 100 °C im Vakuum getrocknet.

Es fielen 30,03 g eines weißen Feststoffes an (91,2% d. Theorie).

### Herstellungsbeispiel 5

### N,N'-Bis[3-(dimethylamino)propyl]-succinamid

49,285 g (0,3021 mol) Bernsteinsäuredichlorid wurden in 50 mL Diethylether gelöst und bei max. 10 °C unter Eiskühlung innerhalb von 2 Stunden mit einer etherischen Lösung bestehend aus 76,80 mL (0,6042 mol) N,N'-Dimethylaminopropylamin und 84,60 mL (0,6042 mol) Triethylamin in 450 mL Diethylether versetzt. Nach Beendigung der Zugabe wurde das Reaktionsgemisch eine Stunde bei Raumtemperatur gerührt. Anschließend wurden 200 mL Dichlormethan zugegeben und das Reaktionsgemisch wurde eine Stunde unter Rückfluss erhitzt. Anschließend wurde der Reaktionsansatz auf Raumtemperatur abgekühlt und das überschüssige Lösemittel im Vakuum entfernt. Der feste Rückstand wurde mit 32,02 g (0,3021 mol) Natriumcarbonat und 500 mL Wasser versetzt, 30 Minuten gerührt und das Wasser entfernt. Der feste Rückstand wurde erneut in 200 mL aufgenommen und das Reaktionsgemisch filtriert. Das Filtrat wurde mit 10 g Aktivkohle versetzt, 30 Minuten gerührt, filtriert und das überschüssige Ethanol im Vakuum entfernt. Der dabei entstehende Rückstand wurde zweimal mit 300 mL Essigsäureethylester ausgekocht, wobei der unlösliche Bodensatz verworfen wurde. Die vereinigten Essigsäureethylester-Fraktionen wurden mit 10 g Aktivkohle versetzt und 10 Minuten auf Rückfluss erhitzt und anschließend heiß filtriert. Der überschüssige Essigsäureethylester wurde abdestilliert und der Rückstand in 300 mL Diethylether 10 Minuten ausgerührt. Anschließend wurde der Feststoff abfiltriert und im Vakuum getrocknet.

Es entstanden 39,08 g eines hellbraunen Feststoffes (45,16% d. Theorie).

### Herstellungsbeispiel 6

### Polymer mit einem Monomer A der Formel II, bei dem R1, R2, R5, R6 = Methyl, R3, R4 = (CH₂)₂ und X = O, und einem Monomer B, bei dem X, Y = Cl, R9 = (CH₂)₂O(CH₂)₂O(CH₂)₂; molares Verhältnis A : B = 4 : 3

20,0 g (0,099 mol) N,N'-Bis[2-(dimethylamino)ethyl]harnstoff wurden in 34,33 g Wasser gelöst. Anschließend wurden 12,01 mL (0,0743 mol) 1,2-Bis(2-chloroethoxy)-ethan zugegeben und das Reaktionsgemisch wurde für 4 Stunden auf 80 °C erwärmt. Nach dem Abkühlen wurde eine wässrige Polymerlösung erhalten.

### Herstellungsbeispiel 7

### Polymer gemäß Herstellungsbeispiel 6 angesäuert auf pH 2

34,33 g (50 Gew-%) einer wässrigen Polymerlösung gemäß Herstellungsbeispiel 6 wurden mit 2,35 mL Salzsäure (37 Gew.-%) auf einen pH-Wert 2 eingestellt.

### Herstellungsbeispiel 8

### Polymer mit einem Monomer A der Formel II, bei dem R1, R2, R5, R6 = Methyl, R3, R4 = (CH₂)₂ und X = O, und einem Monomer B, bei dem X, Y = Cl, R9 = (CH₂)₂O(CH₂)₂; molares Verhältnis A : B = 4 : 3

20,0 g (0,099 mol) N,N'-Bis[2-(dimethylamino)ethyl]harnstoff wurden in 30,62 g Wasser gelöst. Anschließend wurden 8,71 mL (0,0743 mol) Bis-(2-chlorethyl)-ether zugegeben und das Reaktionsgemisch wurde für 4 Stunden auf 80 °C erwärmt. Nach dem Abkühlen wurde eine wässrige Polymerlösung erhalten.

### Herstellungsbeispiel 9

### Polymer gemäß Herstellungsbeispiel 8 angesäuert auf pH 2

30,62 g (50 Gew-%) einer wässrigen Polymerlösung gemäß Herstellungsbeispiel 8 wurden mit 2,52 mL Salzsäure (37 Gew.-%) auf einen pH-Wert 2 eingestellt.

### Herstellungsbeispiel 10

### Polymer mit einem Monomer A der Formel II, bei dem R1, R2, R5, R6 = Methyl, R3, R4 = (CH₂)₃ und X = O, und einem Monomer B, bei dem X = Cl, Y = Br, R9 = (CH₂)₃; molares Verhältnis A : B = 4 : 3

50,0 g (0,2171 mol) N,N'-Bis[3-(dimethylamino)propyl]harnstoff wurden in 75,86 g Wasser gelöst. Anschließend wurden 16,26 mL (0,1628 mol) 1-Brom-3-chlor-propan zugegeben und das Reaktionsgemisch wurde für 4 Stunden auf 80 °C erwärmt. Nach dem Abkühlen wurde eine wässrige Polymerlösung erhalten. Das auf diese Weise erhaltene Polymer wurde mit 2,74 mL Salzsäure (37 Gew.-%) auf einen pH-Wert 2,5 eingestellt.

### Herstellungsbeispiel 11

### Polymer mit einem Monomer A der Formel II, bei dem R1, R2, R5, R6 = Methyl, R3, R4 = (CH₂)₃ und X = O, und einem Monomer B, bei dem X = Cl, Y = Br, R9 = (CH₂)₃; molares Verhältnis A : B = 5 : 4

50,0 g (0,2171 mol) N,N'-Bis[3-(dimethylamino)propyl]harnstoff wurden in 77,90 g Wasser gelöst. Anschließend wurden 17,44 mL (0,1737 mol) 1-Brom-3-chlor-propan zugegeben und das Reaktionsgemisch wurde für 4 Stunden auf 80 °C erwärmt. Nach dem Abkühlen wurde eine wässrige Polymerlösung erhalten. Das auf diese Weise erhaltene Polymer wurde mit 1,94 mL Salzsäure (37 Gew.-%) auf einen pH-Wert 2,5 eingestellt.

### Herstellungsbeispiel 12

### Polymer mit einem Monomer Ader Formel II, bei dem R1, R2, R5, R6 = Methyl, R3, R4 = (CH₂)₃ und X = O, und einem Monomer B, bei dem X, Y = Cl, R9 = (CH₂)₂O(CH₂)₂; molares Verhältnis A : B = 4 : 3

289,74 g (1,2578 mol) N,N'-Bis[3-(dimethylamino)propyl]harnstoff wurden in 423,29 g Wasser gelöst. Anschließend wurden 111,69 mL (0,9433 mol) Bis-(2-chlorethyl)-ether zugegeben und das Reaktionsgemisch wurde für 3 Stunden auf 80 °C erwärmt. Nach dem Abkühlen wurde eine wässrige Polymerlösung erhalten.

### Herstellungsbeispiel 13

### Polymer gemäß Herstellungsbeispiel 12 angesäuert auf pH 2

30,62 g (50 Gew-%) einer wässrigen Polymerlösung gemäß Herstellungsbeispiel 12 wurden mit 2,52 mL Salzsäure (37 Gew.-%) auf einen pH-Wert 2 eingestellt.

### Herstellungsbeispiel 14

### Polymer mit einem Monomer A der Formel II, bei dem R1, R2, R5, R6 = Methyl, R3, R4 = (CH₂)₃ und X = O, und einem Monomer B, bei dem X, Y = Cl, R9 = (CH₂)₂O(CH₂)₂; molares Verhältnis A : B = 5 : 4

15,95 g (0,0693 mol) N,N'-Bis[3-(dimethylamino)propyl]harnstoff wurden in 23,79 g Wasser gelöst. Anschließend wurden 6,49 mL (0,0554 mol) Bis-(2-chlorethyl)-ether zugegeben und das Reaktionsgemisch wurde für 4 Stunden auf 80 °C erwärmt. Nach dem Abkühlen wurde eine wässrige Polymerlösung erhalten.

### Herstellungsbeispiel 15

### Polymer mit einem Monomer A der Formel II, bei dem R1, R2, R5, R6 = Methyl, R3, R4 = (CH₂)₃ und X = O, und einem Monomer B, bei dem X, Y = Cl, R9 = (CH₂)₂O(CH₂)₂; molares Verhältnis A : B = 10 : 9

14,18 g (0,0616 mol) N,N'-Bis-[3-(dimethylamino)propyl]harnstoff wurden in 22,02 g Wasser gelöst. Anschließend wurden 6,56 mL (0,0554 mol) Bis-(2-chlorethyl)-ether zugegeben und das Reaktionsgemisch wurde für 4 Stunden auf 80 °C erwärmt. Nach dem Abkühlen wurde eine wässrige Polymerlösung erhalten.

### Herstellungsbeispiel 16

### Polymer mit einem Monomer A1 der Formel II, bei dem R1, R2, R5, R6 = Methyl, R3, R4 = (CH₂)₃ und X = NH, einem Monomer B1, bei dem bei dem X, Y = Cl, R9 = (CH₂)₂O(CH₂)₂, und einem Monomer B2, bei dem X, Y = Cl, R9 = CH₂CHOHCH₂; molares Verhältnis A : B1 : B2 = 4 : 2 : 1

50 g (0,218 mol) N,N'-Bis[3-(dimethylamino)propyl]harnstoff wurden in 65,59 g Wasser gelöst. Anschließend wurden 12,79 mL (0,109 mol) Bis-(2-chlorethyl)-ether zugegeben und das Reaktionsgemisch wurde 4 Stunden auf 80 °C erwärmt. Nach beendeter Reaktion wurde auf das Reaktionsgemisch auf Raumtemperatur abgekühlt und mit 2,8 g Wasser auf eine 50 Gew.-%-ige wässrige Oligomerlösung eingestellt. Zu dieser Oligomerlösung wurden 5,25 mL (0,0545 mol) 1,3-Dichlor-2-propanol gegeben und das Reaktionsgemisch wurde erneut 4 Stunden auf 80 °C erhitzt. Es entstand eine wässrige Polymerlösung.

### Herstellungsbeispiel 17

### Polymer gemäß Herstellungsbeispiel 16 angesäuert auf pH 2

13,629 g (50 Gew-%) einer wässrigen Polymerlösung gemäß Herstellungsbeispiel 16 wurden mit 2,5 mL Salzsäure (37 Gew.-%) auf einen pH-Wert 2 eingestellt.

### Herstellungsbeispiel 18

### Polymer mit einem Monomer A der Formel IV, bei dem R1, R2, R5, R6 = Methyl, R3, R4 = (CH₂)₃, R8 = (CH₂)₂ und X, Y = O, und einem Monomer B, bei dem X, Y = Cl, R9 = (CH₂)₂O(CH₂)₂; molares Verhältnis A : B = 4 : 3

5 g (17,5 mmol) N,N'-Bis[3-(dimethylamino)propyl]-succinamid wurden in 7 g Wasser gelöst und mit 1,87 g (13,1 mmol) Bis-(2-chlorethyl)-ether versetzt. Anschließend wurde das Reaktionsgemisch 12 Stunden auf Rückfluss erhitzt. Es entsteht eine wässrige Polymerlösung.

### Herstellungsbeispiel 19

### Polymer mit einem Monomer A der Formel III, bei dem R1, R2, R5, R6 = Methyl; R3, R4 = (CH₂)₂ und X,Y = NH, und einem Monomer B, bei dem X, Y = Cl, R9 = (CH₂)₂O(CH₂)₂; molares Verhältnis A : B = 4 : 3

0,9 g (3,68 mmol) N,N'-Bis[2-(dimethylamino)ethyl]biguanidin wurden in 10 mL Wasser gelöst und mit 0,39 g (2,76 mmol) Bis-(2-chlorethyl)-ether versetzt. Anschließend wurde das Reaktionsgemisch 24 Stunden auf Rückfluss erhitzt. Es entstand eine wässrige Polymerlösung.

### Herstellungsbeispiel 20

### Oligomer mit einem Monomer A der Formel II, bei dem R1, R2, R5, R6 = Methyl, R3, R4 = (CH₂)₃ und X = O, und einem Monomer B, bei dem X, Y = Cl; R9 = (CH₂)₂O(CH₂)₂; molares Verhältnis A : B = 2 : 1

100 g (0,434 mol) N,N'-Bis[3-(dimethylamino)propyl]harnstoff wurden in 131,35 g Wasser gelöst. Anschließend wurden 25,72 mL (0,217 mol) Bis-(2-chlorethyl)-ether zugegeben und das Reaktionsgemisch wurde 4 Stunden auf 80 °C erwärmt. Nach beendeter Reaktion wurde das Reaktionsgemisch auf Raumtemperatur abgekühlt. Es wurde eine wässrige Oligomer-Lösung erhalten.

### Herstellungsbeispiel 21

### Oligomer gemäß Herstellungsbeispiel 20 angesäuert auf pH 2

Zu 50 g einer gemäß Herstellungsbeispiel 20 hergestellten Oligomer-Lösung (50 Gew.-%) wurde solange konz. Salzsäure zugegeben, bis ein pH-Wert von 2 erreicht war.

### Herstellungsbeispiel 22

### Polymer mit einem Monomer A der Formel II, bei dem R1, R2, R5, R6 = Methyl, R3, R4 = (CH₂)₃ und X = O, und einem Monomer B, bei dem X = Cl, Y = Br, R9 = (CH₂)₃; molares Verhältnis A : B = 2 : 1

50,0 g (0,2171 mol) N,N'-Bis[3-(dimethylamino)propyl]harnstoff wurden in 66,91 g Wasser gelöst. Anschließend wurden 17,26 mL (0,1086 mol) 1-Brom-3-chlor-propan zugegeben und das Reaktionsgemisch wurde für 16 Stunden auf 80 °C erwärmt. Nach dem Abkühlen wurde eine wässrige Polymerlösung erhalten.

### Herstellungsbeispiel 23

### Polymer mit einem Monomer A der Formel II, bei dem R1, R2, R5, R6 = Methyl, R3, R4 = (CH₂)₃ und X = O, und einem Monomer B, bei dem X, Y = Cl; R9 = (CH₂)₂O(CH₂)₂O(CH₂)₂; molares Verhältnis A : B = 4 : 3

10,0 g (0,0436 mol) N,N'-Bis[3-(dimethylamino)propyl]harnstoff wurden in 16,31 g Wasser gelöst. Anschließend wurden 5,29 mL (0,0327 mol) 1,2-Bis-(2-chloroethoxy)-ethan zugegeben und das Reaktionsgemisch wurde für 4 Stunden auf 80 °C erwärmt. Nach dem Abkühlen wurde eine wässrige Polymerlösung erhalten.

Elektrolytbäder mit den gemäß den Herstellungsbeispielen 6 bis 23 hergestellten Polymeren als Additive wurden den folgenden Testverfahren unterworfen.

### Anwendungsbeispiele 1 bis 11 - alkalische Elektrolyte

### Angewendete Testverfahren

### (a) Blasen-Schnelltest

Um die Erscheinung der Blasenbildung zu beurteilen, wurde der Blasentest gemäß Dokument EP 1 114 206 B1 verwendet. Bei dem Blasentest wurde folgender Grundelektrolyt verwendet:

| | |
|---|---|
| 15,6 g/L | Zink |
| 127 g/L | NaOH |
| 15 mL/L | Protolux Modifier 2x™ conc. (Fa. Atotech Deutschland GmbH) |
| 4 mL/L | Protolux 3000 Additive™ (Fa. Atotech Deutschland GmbH) |
| 0,66 g/L | Polymere nach den Herstellungsbeispielen 6 bis 17 bzw. Vergleichpolymere (als Festsubstanz) |
| 10 mg/L | 1-Benzyl-3-carbamoyl-pyridinium-chlorid |

### (b) Schichtdickenverteilungstests

Es wurde folgender Grundelektrolyt verwendet:

| | |
|---|---|
| 15,6 g/L | Zink |
| 127 g/L | NaOH |
| 15 mL/L | Protolux Modifier 2x™ conc. (Fa. Atotech Deutschland GmbH) |
| 4 mL/L | Protolux 3000 Additive™ (Fa. Atotech Deutschland GmbH) |
| 0,66 g/L | Polymere nach den Herstellungsbeispielen 6 bis 17 bzw. Vergleichspolymere (als Festsubstanz) |
| 10 mg/L | 1-Benzyl-3-carbamoyl-pyridinium-chlorid |

250 mL der Lösung wurden in eine Hull-Zelle gefüllt. Als Anode diente eine Zink-Anode. Das Kathodenblech wurde 15 Minuten bei 1 A und Raumtemperatur beschichtet. Nach beendeter Beschichtung wurde das Blech abgespült, 10 s in Salpetersäure (0,3 Vol-%) aufgehellt, wieder gespült und unter Pressluft getrocknet. Die Schichtdickemessung erfolgte an zwei Punkten 3 cm vom unteren Rand und 2,5 cm vom rechten und linken seitlichen Rand bei hoher Stromdichte (2,8 A/dm², HCD) und niedriger Stromdichte (0,5 A/dm², LCD). Gemessen wurde mit XRF an vier Stellen bei der jeweiligen Position, um den Messfehler so gering wie möglich zu halten. Die Schichtdickenverteilung entspricht dem Verhältnis der gemessenen Werte für die Schichtdicke bei hoher (HCD) und niedriger Stromdichte (LCD), d.h. Schichtdickeverteilung = HCD/LCD. Die erhaltenen Ergebnisse sind in den Tabellen 1 und 2 zusammengestellt.

**Tabelle 1: Anwendungsbeispiele 1 bis 9**

| Bsp. | Polymer gem Herstellungsbsp. | Monomer A | Monomer B | A:B | Zusatz HCl | pH | HCD (µm) | LCD (µm) | HCD / LCD | Anbrennung | Blasen | Glanz |
|---|---|---|---|---|---|---|---|---|---|---|---|---|
| 1 | 6 | 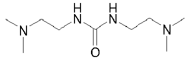 | 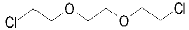 | 4 : 3 | nein | 10 | 6,9 | 3,5 | 2,0 | sehr stark | keine | ++ |
| 2 | 7 | 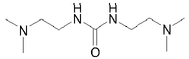 | 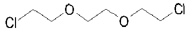 | 4 : 3 | ja | 2 | 6,3 | 4,5 | 1,5 | sehr gering | keine | ++ |
| 3 | 8 | 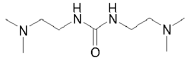 | 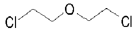 | 4 : 3 | nein | 10 | 7,7 | 3,9 | 1,8 | sehr gering | keine | ++ |
| 4 | 10 | 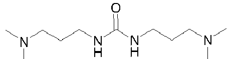 | 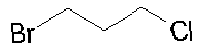 | 4 : 3 | ja | 2,5 | 5,4 | 2,8 | 1,9 | nein | keine | ++ |
| 5 | 11 | 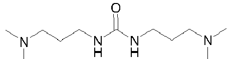 | 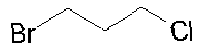 | 5 : 4 | ja | 2,0 | 4,5 | 3,3 | 1,36 | nein | keine | ++ |
| 6 | 12 | 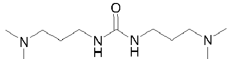 | 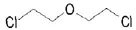 | 4 : 3 | nein | 10 | 4,7 | 3,3 | 1,4 | nein | keine | ++ |
| 7 | 14 | 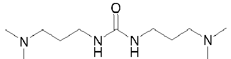 | 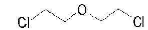 | 5:4 | nein | 10 | 4,6 | 3,2 | 1,44 | nein | keine | ++ |
| 8 | 15 | 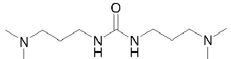 | 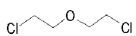 | 10 : 9 | nein | 10 | 4,7 | 3,4 | 1,38 | nein | keine | ++ |
| 9 | Vergleichsexperiment Verwendung eines Polymers gemäß Herstellungsbeispiel 2.2 des Dokuments EP 1 114 206 B1 | | | | ja | 2,5 | 7,8 | 2,6 | 2,6 | stark | ja | + |

**Tabelle 2: Anwendungsbeispiele 9 bis 11**

| Bsp. | Polymer gem Herstellungsbsp. | Monomer A | Monomer B1 | Monomer B2 | A1 : B1 : B2 | Zusatz HCl | pH | HCD (µm) | LCD (µm) | HCD/ LCD | Anbrennung | Blasen | Glanz |
|---|---|---|---|---|---|---|---|---|---|---|---|---|---|
| 10 | 16 | 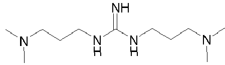 | 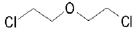 | 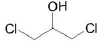 | 4:2:1 | nein | 12 | 6,1 | 3,0 | 2,0 | keine | nein | ++ |
| 11 | 17 | 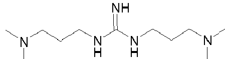 | 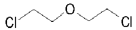 | 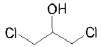 | 4:2:1 | ja | 2,0 | 6,0 | 3,7 | 1,6 | keine | nein | +++ |
| 9 | Vergleichsexperiment Verwendung eines Polymers gemäß Herstellungsbeispiel 2.2 des Dokuments EP 1 114 206 B1 | | | | | ja | 2,5 | 7,8 | 2,6 | 2,6 | stark | ja | + |

Tabelle 1 zeigt die Schichtdicke (und somit Stromausbeute), Glanz, Anbrennungen und Schichtdickenverteilung bei den erfindungsgemäßen Elektrolyten zur Abscheidung einer Zinkschicht. Wie aus Tabelle 1 ersichtlich wird, führt der Einsatz der Polymere der Formel I als Additive in galvanischen Bädern zu besseren Schichtdickenverteilungen. Die Schichtdickeverteilung ist das Verhältnis der Schichtdicke der Zinkschicht im hohen Stromdichtebereich (HCD) zur Schichtdicke im niedrigen Stromdichtebereich (LCD), wie in Tabelle 1 gezeigt. Das Verhältnis ist mit 2,6 für das Beispiel 9 (Stand der Technik) am schlechtesten, während es bei Einsatz der erfindungsgemäßen Additive zwischen 1,38 (Beispiel 8) und 2,0 (Beispiel 1) liegt. Ferner sind die Anbrennungen im hohen Stromdichtebereich, wie sie bei kommerziellen Kornverfeinerern (Beispiel 9) gefunden werden, schwächer bzw. gar nicht mehr vorhanden. Je nach Polarität der eingesetzten Dihalogenide können bzw. dürfen die Polymere einen höheren Polymersisationsgrad aufweisen.

Überraschend wurde gefunden, dass die Abscheideergebnisse durch Zugabe weiterer Halogenid-Ionen-Äquivalente, die vorteilhafter durch Ansäuern des Ursprungspolymers zugefügt werden können, entscheidend beeinflusst bzw. gezielt variiert werden können. So ist aus den Beispielen 1 und 2 ersichtlich, dass durch Zugabe von Salzsäure (ca. 2 Äquivalente pro Äquivalent Polymer) zum einen die Streuung des Elektrolyten und zum anderen die Tendenz zur Anbrennung verringert wird. Dabei wird vor allem durch die Halogenidzugabe eine Erhöhung der Stromausbeute im niedrigen Stromdichtebereich erreicht. Gerade die sehr viel höheren Stromausbeuten im niedrigen Stromdichtebereich sind sehr interessant für Anwendungen bei Trommelgalvanisierungen. Die Halogenid-Ionen können dabei zum einen in Form der korrespondierenden Mineralsäuren, oder durch Quaternisierung der endständigen tertiären Aminofunktionalitäten mit entsprechenden Alkylhalogeniden bzw. durch Zugabe von Alkalimetall-, Erdalkalimetall-, Zink- oder Ammoniumhalogeniden erfolgen. Dabei kann bei den Ammoniumhalogeniden neben den unsubstituierten Ammoniumhalogeniden auch Alkylammoniumhalogenide, wie z.B. Tetraalkylammoniumchlorid oder Ammoniumsalze, wie sie beispielsweise in dem Dokument US 3,960,677 beschrieben sind, eingesetzt werden.

Wie aus Tabelle 2 ersichtlich, können durch die Verwendung gemischter Polymere glänzendere Zinkabscheidungen bei gleichzeitig verbesserter Streuung erhalten werden. Auch hier kann durch Zusatz weiterer Halogenid-Ionen (z.B. durch Zusatz von Salzsäure) zum einen eine Verbesserung der Streuung und zum anderen eine weitere Verbesserung des Glanzes erreicht werden.

### Anwendungsbeispiele 12 und 13 - alkalische Zink-Nickel-Elektrolyte

### Angewendete Testverfahren

### (c) Schichtdickenverteilungstests

Es wurde folgender Grundelektrolyt verwendet:

| | |
|---|---|
| 10 g/L | Zink |
| 2 g/L | Nickel |
| 80 g/L | Triethanolamin |
| 36 g/L | Tetraethylenpentamin |
| 0,66 g/L | Zusätze nach den Herstellungsbeispielen 6 bis 17 bzw. Vergleichspolymere (als Festsubstanz) |
| 60 mg/L | 1-Benzyl-3-carboxyl-pyridinium-chlorid |

250 mL der Lösung wurden in eine Hull-Zelle gefüllt. Als Anode diente eine Zink-Anode. Das Kathodenblech wurde 15 Minuten bei 1 A und Raumtemperatur beschichtet. Nach beendeter Beschichtung wurde das Blech abgespült, 10 s in Salpetersäure (0,3 Vol-%) aufgehellt, wieder gespült und unter Pressluft getrocknet. Die Schichtdickemessung erfolgte an zwei Punkten 3 cm vom unteren Rand und 2,5 cm vom rechten und linken seitlichen Rand bei hoher Stromdichte (2,8 A/dm², HCD) und niedriger Stromdichte (0,5 A/dm², LCD). Gemessen wurde mit XRF an vier Stellen bei der jeweiligen Position, um den Messfehler so gering wie möglich zu halten. Die Schichtdickenverteilung entspricht dem Verhältnis der gemessenen Werte für die Schichtdicke bei hoher (HCD) und niedriger Stromdichte (LCD), d.h. Schichtdickeverteilung = HCD/LCD. Die erhaltenen Ergebnisse sind in Tabelle 3 zusammengestellt.

**Tabelle 3: Anwendungsbeispiele 12 und 13**

| Bsp. | Polymer | HCD (µm) | LCD (µm) | Ni-Gehalt [%] HCD | Ni-Gehalt [%] LCD | Glanz | Beobachtung |
|---|---|---|---|---|---|---|---|
| 12 | Polymer gem. Herstellungsbsp.13 | 8,64 | 3,3 | 10,7 | 10,1 | +++ | Durchgehender Glanz |
| 13 | Vergleichsbeispiel mit Mirapol WT™ (gemäß US 5,435,898; Spalte 3, Z. 17 ff.) | 8,64 | 3,0 | 11,2 | 9,4 | ++ | Matte Abscheidung bei sehr niedrigen Stromdichten |

Tabelle 3 verdeutlicht die Wirkung der erfindungsgemäßen Elektrolytzusammensetzungen bei Zink-Nickel-Abscheidungen. Wie aus Tabelle 3 ersichtlich, wird mit den Polymeren der Formel I in Zink-Nickel-Elektrolyten eine einheitliche über den gesamten Stromdichtebereich glänzende Abscheidung erhalten. Mit den bekannten Polymeren Mirapol WT™ (Beispiel 13) sind lediglich in hohen bis mittleren Stromdichtebereichen homogene glänzende Schichten erhältlich.

### Anwendungsbeispiele 14 bis 22 - saure Zink-Elektrolyte

### Angewendete Testverfahren

### (d) Test der optischen Eigenschaften

Es wurde folgender Grundelektrolyt verwendet:

| | |
|---|---|
| 58 g/L | Zinkchlorid |
| 180 g/L | Ammoniumchlorid |
| 3,3 g/L | Natriumbenzoat |
| 2,6 g/L | eines ethoxylierten α-Naphtols (Molekulargewicht ca. 670 g/mol) |
| 2,65 g/L | eines Alkylnaphthalennatriumsulfonates |
| 1,24 g/L | Salzsäure (33%-ig) |
| 2,0 g/L | Polymer bzw. Vergleichspolymere gemäß Tabelle 4 (als 50%-ige Lösung) |
| 0,5 g/L | Chlorbenzaldehyd |

Ammoniak (30%-ig) zum Einstellen des pH-Wertes auf 5 bis 7

250 mL der Lösung wurden in eine Hull-Zelle gefüllt. Als Anode diente eine Zink-Anode. Das Kathodenblech wurde 15 Minuten bei 1 A und Raumtemperatur beschichtet. Nach beendeter Beschichtung wurde das Blech abgespült, 10 s in Salpetersäure (0,3 Vol-%) aufgehellt, wieder gespült und unter Pressluft getrocknet. Die optischen Eigenschaften des Blechs wurden visuell beurteilt. Die erhaltenen Ergebnisse sind in Tabelle 4 zusammengestellt.

**Tabelle 4: Anwendungsbeispiele 14 bis 22**

| Bsp. | Monomer A | Monomer B | A : B | Zusatz HCl | pH | Glanz | Schleier | Anbrennung |
|---|---|---|---|---|---|---|---|---|
| 14 | 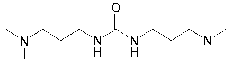 | 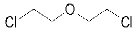 | 2 : 1 | nein | 12 | ++ | - | gering |
| 15 | 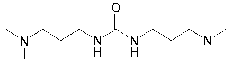 | 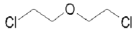 | 2 : 1 | ja | 2,0 | ++++ | - | gering |
| 16 | 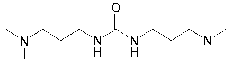 | 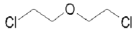 | 4 : 3 | ja | 2,0 | +++ | - | gering |
| 17 | 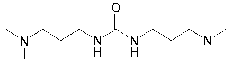 | 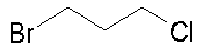 | 2: 1 | ja | 2,0 | +++ | - | gering |
| 18 | 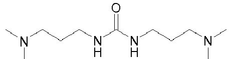 | 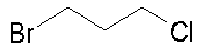 | 5 : 4 | nein | 12 | +++ | - | gering |
| 19 | 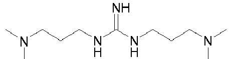 | 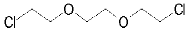 | 4 : 3 | nein | 12 | ++++ | - | keine |
| 20 | 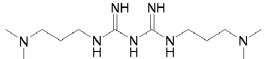 | 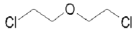 | 4 : 3 | nein | 12 | +++ | - | gering |
| 21 | 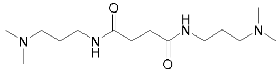 | 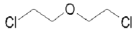 | 4 : 3 | nein | 12 | +++ | - | gering |
| 22 | Vergleichsexperiment mit Mirapol WT™ (gemäß US 5,435,898; Spalte 3, Z. 17 ff.) | | | | | ++ | vorhanden | sehr stark |

Tabelle 4 verdeutlicht, dass die bei herkömmlichen sauren Zinkbädern häufig auftretenden Anbrennungen durch die Polymere der Formel I vermieden werden können. Wie aus Tabelle 4 ersichtlich ist, werden mit den Polymeren der Formel I glänzendere Zinkabscheidungen aus schwach sauren Ammonium-haltigen Bädern erhalten als mit kommerziell erhältlichen Polymeren. Durch Halogenidzugabe, z.B. in Form von Salzsäure, kann eine Schichtverbesserung erreicht werden (siehe Beispiele 14 und 15: höherer Glanz bei Verwendung einer Zusammensetzung gemäß Beispiel 15 enthaltend Chlorid).

## Patentansprüche

1. Elektrolytbad zur galvanischen Abscheidung einer Zink- oder Zinklegierungsschicht, wobei das Elektrolytbad ein Polymer der folgenden Formel I enthält,
A-[-L-A-]ₙ-L-A (I)
wobei A für eine Einheit steht, die abgeleitet ist von einer Diaminoverbindung einer der folgenden Formeln II bis VII 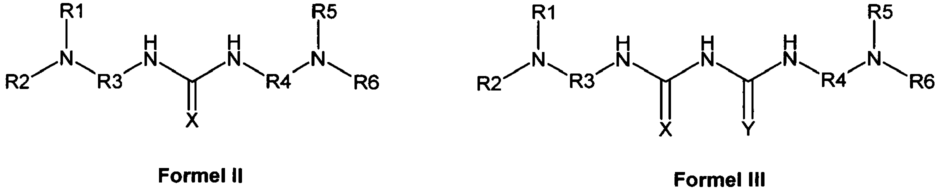 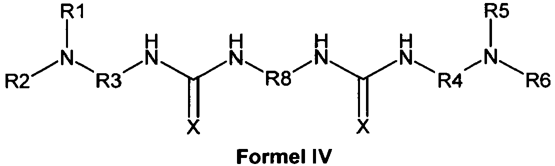 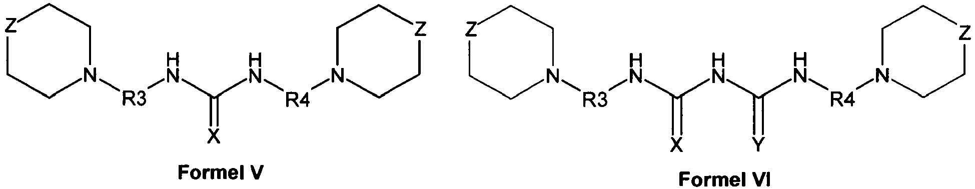 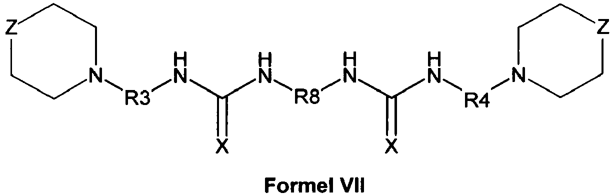
wobei
X und Y jeweils gleich oder verschieden sein können und für O oder NR stehen, wobei R für H oder C₁-C₆-Alkyl steht,
Z jeweils gleich oder verschieden sein kann und für O oder S steht,
R1, R2, R5, und R6 jeweils gleich oder verschieden sein können und für einen substituierten oder unsubstituierten Kohlenwasserstoffrest mit 1 bis 10 Kohlenstoffatomen stehen, und
R3, R4, R8 jeweils gleich oder verschieden sein können und für (CH₂)ₚ, wobei p für eine ganze Zahl von 2 bis 12 steht, oder für eine -[CH₂CH₂O]ₙ-CH₂CH₂-Gruppe, wobei n zwischen 1 und 40 liegt, stehen,
wobei L für einen zweiwertigen Rest steht, der ausgewählt ist aus der Gruppe bestehend aus
-(CH₂)ₚ-, wobei p zwischen 1 und 12 liegt,
-CH₂-CH(OH)-CH₂- und -[CH₂CH₂O]_{q}-CH₂CH₂-, wobei q zwischen 1 und 40 liegt;
wobei die einzelnen Einheiten A gleich oder verschieden sein können,
wobei die einzelnen Reste L gleich oder verschieden sein können,
wobei n für eine ganze Zahl steht und n > 0 ist,
wobei die Polymerkette an beiden Enden Einheiten A aufweist, und
wobei das Polymer erhältlich ist durch Umsetzen einer oder mehrerer Diaminoverbindungen der Formeln II bis VII mit einer oder mehreren Verbindungen der folgenden Formel VIII,
P-L-Q (VIII)
wobei L die gleiche Bedeutung hat wie in Formel I hat und wobei P und Q jeweils gleich oder verschieden sein können und für Halogene wie Cl, Br und I oder OMs (Mesylat), OTf (Triflat), ONf (Nonaflat), oder OTs (Tosylat) stehen, und
wobei das Verhältnis (n_{A} : n_{B}) der insgesamt eingesetzten Stoffmenge der Verbindung(en) der Formeln II bis VII (n_{A}) zur insgesamt eingesetzten Stoffmenge der Verbindung(en) der Formel VIII (n_{B}) mindestens 1,1 : 1 beträgt.

2. Elektrolytbad nach Anspruch 1, wobei R1, R2, R5, und R6 jeweils gleich oder verschieden sein können und für Methyl, Ethyl, Hydroxyethyl oder -CH₂CH₂(OCH₂CH₂)_{y}-OH, wobei y zwischen 0 und 4 liegt, stehen.

3. Elektrolytbad nach Anspruch 1 oder 2, wobei R3, R4, R8 jeweils gleich oder verschieden sein können und für eine Ethylen-, Propylen-, -(CH₂)₂-O-(CH₂)₂- oder -(CH₂)₂-O-(CH₂)₂-O-(CH₂)₂-Gruppe stehen.

4. Elektrolytbad nach Anspruch 1, 2 oder 3, wobei L für einen zweiwertigen Rest steht, der ausgewählt ist aus der Gruppe bestehend aus -(CH₂)ₚ-, wobei p zwischen 2 und 4 liegt, -(CH₂)₂-O-(CH₂)₂- und -(CH₂)₂-O-(CH₂)₂-O-(CH₂)₂-.

5. Elektrolytbad nach Anspruch 1, wobei das Verhältnis n_{A} : n_{B} mindestens 1,3 : 1 beträgt.

6. Elektrolytbad nach einem der Ansprüche 1 bis 5, wobei das Polymer der Formel I kein organisch gebundenes Halogen aufweist.

7. Elektrolytbad nach einem der Ansprüche 1 bis 6, wobei das Polymer der Formel I ein Molekulargewicht von mindestens 500 g/mol aufweist.

8. Elektrolytbad nach einem der Ansprüche 1 bis 7, wobei das Polymer der Formel I in einer Menge von 0,01 bis 50 g/L enthalten ist.

9. Elektrolytbad nach einem der Ansprüche 1 bis 8, wobei zu dem Polymer der Formel I Halogenid-Ionen zugegeben worden sind.

10. Elektrolytbad nach Anspruch 9, wobei die Zugabe der Halogenid-Ionen durch Zugabe der korrespondierenden Mineralsäuren, durch Quaternisierung der endständigen tertiären Aminogruppen mit entsprechenden Alkylhalogeniden oder durch Zugabe von Alkalimetall-, Erdalkalimetall-, Zink- oder Ammoniumhalogeniden erfolgt ist.

11. Elektrolytbad nach Anspruch 9 oder 10, wobei das Polymer der Formel I mit etwa 2 Äquivalenten Salzsäure pro Äquivalent Polymer angesäuert worden ist.

12. Polymer der folgenden Formel I,
A -[-L-A-]ₙ-L-A (I)
wobei A für eine Einheit steht, die abgeleitet ist von einer Diaminoverbindung der folgenden Formel III 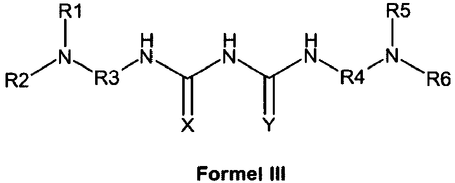
wobei
X und Y jeweils gleich oder verschieden sein können und für O oder NR stehen, wobei R für H oder C₁-C₆-Alkyl steht,
R1, R2, R5, und R6 jeweils gleich oder verschieden sein können und für einen substituierten oder unsubstituierten Kohlenwasserstoffrest mit 1 bis 10 Kohlenstoffatomen stehen, und
R3 und R4 jeweils gleich oder verschieden sein können und für (CH₂)ₚ, wobei p für eine ganze Zahl von 2 bis 12 steht, oder für eine -[CH₂CH₂O]ₙ-CH₂CH₂-Gruppe, wobei n zwischen 1 und 40 liegt, stehen,
wobei L für einen zweiwertigen Rest steht, der ausgewählt ist aus der Gruppe bestehend aus
-(CH₂)ₚ-, wobei p zwischen 1 und 12 liegt,
-CH₂-CH(OH)-CH₂- und -[CH₂CH₂O)_{q}-CH₂CH₂-, wobei q zwischen 1 und 40 liegt;
wobei die einzelnen Einheiten A gleich oder verschieden sein können,
wobei die einzelnen Reste L gleich oder verschieden sein können,
wobei n für eine ganze Zahl steht und n > 0 ist,
wobei die Polymerkette an beiden Enden Einheiten A aufweist, und
wobei das Polymer erhältlich ist durch Umsetzen einer oder mehrerer Diaminoverbindungen der Formel III mit einer oder mehreren Verbindungen der folgenden Formel VIII,
P-L-Q (VIII)
wobei L die gleiche Bedeutung hat wie in Formel I hat und wobei P und Q jeweils gleich oder verschieden sein können und für Halogene wie Cl, Br und I oder OMs (Mesylat), OTf (Triflat), ONf (Nonaflat), oder OTs (Tosylat) stehen, und
wobei das Verhältnis (n_{A} : n_{B}) der insgesamt eingesetzten Stoffmenge der Verbindung(en) der Formeln II bis VII (n_{A}) zur insgesamt eingesetzten Stoffmenge der Verbindung(en) der Formel VIII (n_{B}) mindestens 1,1 : 1 beträgt.

13. Verwendung eines Polymers der folgenden Formel I als Glanzbildner in einem Elektrolytbad zur galvanischen Abscheidung einer Zink- oder Zinklegierungsschicht,
A -[-L-A-]ₙ-L-A (I)
wobei A für eine Einheit steht, die abgeleitet ist von einer Diaminoverbindung einer der folgenden Formeln II bis VII 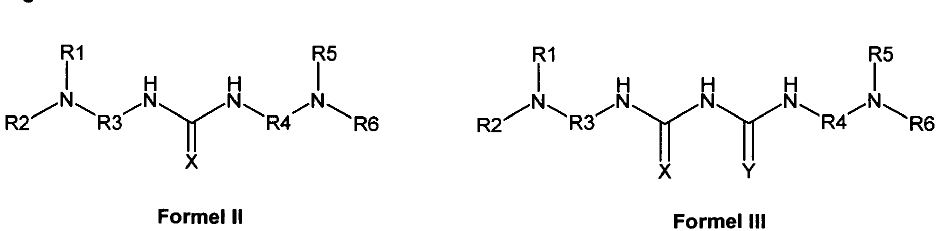 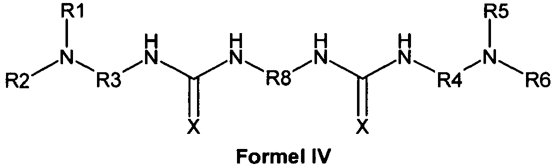 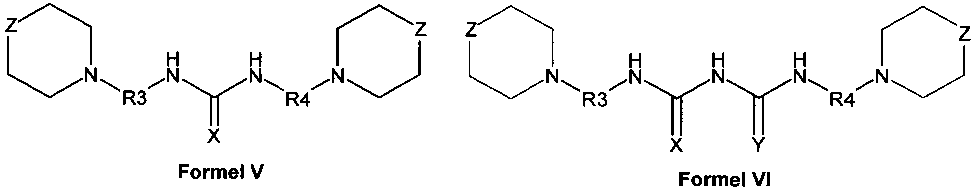 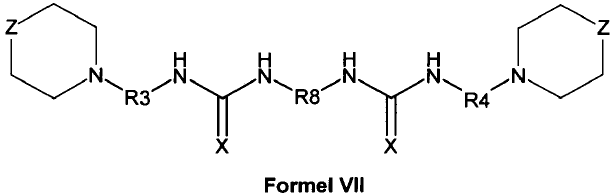
wobei
X und Y jeweils gleich oder verschieden sein können und für O oder NR stehen, wobei R für H oder C₁-C₆-Alkyl steht,
Z jeweils gleich oder verschieden sein kann und für O oder S steht,
R1, R2, R5, und R6 jeweils gleich oder verschieden sein können und für einen substituierten oder unsubstituierten Kohlenwasserstoffrest mit 1 bis 10 Kohlenstoffatomen stehen, und
R3, R4, R8 jeweils gleich oder verschieden sein können und für (CH₂)ₚ, wobei p für eine ganze Zahl von 2 bis 12 steht, oder für eine -[CH₂CH₂O]ₙ-CH₂CH₂-Gruppe, wobei n zwischen 1 und 40 liegt, stehen,
wobei L für einen zweiwertigen Rest steht, der ausgewählt ist aus der Gruppe bestehend aus
-(CH₂)ₚ-, wobei p zwischen 1 und 12 liegt,
-CH₂-CH(OH)-CH₂- und -[CH₂CH₂O]_{q}-CH₂CH₂-, wobei q zwischen 1 und 40 liegt;
wobei die einzelnen Einheiten A gleich oder verschieden sein können,
wobei die einzelnen Reste L gleich oder verschieden sein können,
wobei n für eine ganze Zahl steht und n > 0 ist,
wobei die Polymerkette an beiden Enden Einheiten A aufweist, und
wobei das Polymer erhältlich ist durch Umsetzen einer oder mehrerer Diaminoverbindungen der Formeln II bis VII mit einer oder mehreren Verbindungen der folgenden Formel VIII,
P-L-Q (VIII)
wobei L die gleiche Bedeutung hat wie in Formel I hat und wobei P und Q jeweils gleich oder verschieden sein können und für Halogene wie Cl, Br und I oder OMs (Mesylat), OTf (Triflat), ONf (Nonaflat), oder OTs (Tosylat) stehen, und
wobei das Verhältnis (n_{A} : n_{B}) der insgesamt eingesetzten Stoffmenge der Verbindung(en) der Formeln II bis VII (n_{A}) zur insgesamt eingesetzten Stoffmenge der Verbindung(en) der Formel VIII (n_{B}) mindestens 1,1 : 1 beträgt.

14. Verfahren zur galvanischen Abscheidung von glänzenden und ebenen Zink- oder Zinklegierungsüberzügen, umfassend die Stufe des Einbringens eines zu beschichtenden Substrats in ein Elektrolytbad nach einem der Ansprüche 1 bis 11.

## Claims

1. Electrolyte bath for electrodeposition of a zinc or zinc alloy layer, wherein the electrolyte bath contains a polymer of the following formula I
A-[-L-A-]ₙ-L-A (I)
wherein A represents a unit derived from a diamino compound of one of the following formulae II to VII 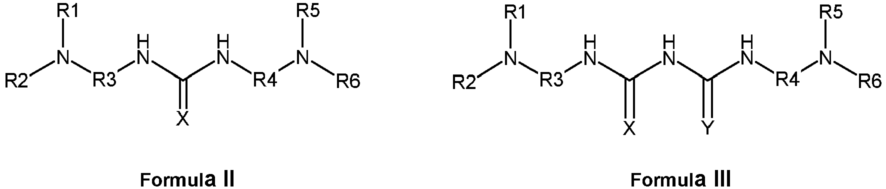 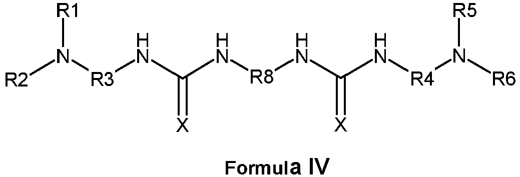 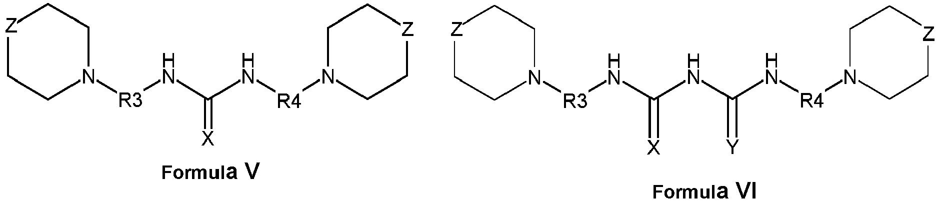 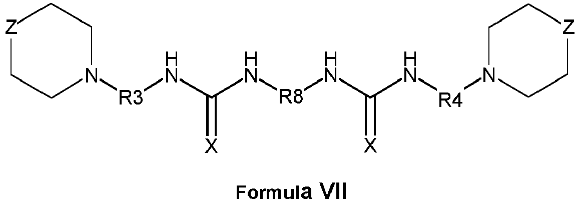
wherein
X and Y each can be the same or different and represent O or NR, wherein R stands for H or C₁-C₆-alkyl,
Z each may be the same or different and represents O or S,
R1, R2, R5, and R6 each may be the same or different and represent a substituted or unsubstituted hydrocarbon residue with 1 to 10 carbon atoms, and
R3, R4, R8 each may be the same or different and represent (CH₂)ₚ, wherein p stands for an integer of 2 to 12 or for a -[CH₂CH₂O]ₙ-CH₂CH₂- group, wherein n is between 1 and 40,
wherein L stands for a divalent residue, which is selected from the group consisting of
-(CH₂)ₚ-, wherein p is between 1 and 12,
-CH₂-CH(OH)-CH₂- and -[CH₂CH₂O]_{q}-CH₂CH₂-, wherein q is between 1 and 40;
wherein the single units A may be the same or different,
wherein the single residues L may be the same or different,
wherein n represents an integer and n > 0,
wherein the polymer chain has units A at both ends, and
wherein the polymer is obtainable by reacting one or more diamino compound(s) of formulae II to VII with one or more compounds of the following formula VIII,
P-L-Q (VIII)
wherein L has the same meaning as in formula I and wherein P and Q each may be the same or different and represent halogens such as Cl, Br and I or OMs (mesylate), OTf (triflate), ONf (nonaflate), or OTs (tosylate), and
wherein the ratio (n_{A} : n_{B}) of the total amount of substance used of the compound(s) of formulae II to VII (n_{A}) to the total amount of substance of the compound(s) of formula VIII (n_{B}) is at least 1.1 : 1.

2. Electrolyte bath according to claim 1, wherein R1, R2, R5, and R6 each may be the same or different and represent methyl, ethyl, hydroxyethyl or -CH₂CH₂(OCH₂CH₂)_{y}-OH, wherein y is between 0 and 4.

3. Electrolyte bath according to claim 1 or 2, wherein R3, R4, R8 may each be the same or different and represent an ethylene, propylene, -(CH₂)₂-O-(CH₂)₂- or -(CH₂)₂-O-(CH₂)₂-O-(CH₂)₂- group.

4. Electrolyte bath according to claim 1, 2 or 3, wherein L represents a divalent residue, which is selected from the group consisting of -(CH₂)ₚ-, wherein p is between 2 and 4, -(CH₂)₂-O-(CH₂)₂- and -(CH₂)₂-O-(CH₂)₂-O-(CH₂)₂-.

5. Electrolyte bath according to claim 1, wherein the ratio n_{A} : n_{B} is at least 1.3 : 1.

6. Electrolyte bath according to any of claims 1 to 5, wherein the polymer of formula I does not have organically bound halogen.

7. Electrolyte bath according to any of claims 1 to 6, wherein the polymer of formula I has a molecular weight of at least 500 g/mol.

8. Electrolyte bath according to any of claims 1 to 7, wherein the polymer of formula I is contained in an amount of 0.01 to 50 g/L.

9. Electrolyte bath according to any of claims 1 to 8, wherein halide ions have been added to the polymer of formula I.

10. Electrolyte bath according to claim 9, wherein the addition of halide ions has been carried out by addition of the corresponding mineral acids, by quaternization of the terminal tertiary amino groups with the corresponding alkyl halides or by addition of alkaline, earth alkaline, zinc or ammonium halides.

11. Electrolyte bath according to claim 9 or 10, wherein the polymer of formula I has been acidified with about 2 equivalents of hydrochloric acid per equivalent of polymer.

12. Polymer of the following formula I,
A -[-L-A-]ₙ-L-A (I)
wherein A represents a unit derived from a diamino compound of the following formula III 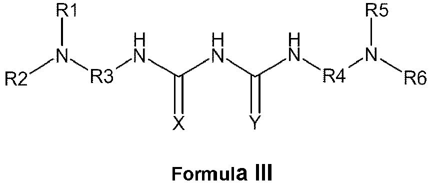
wherein
X and Y each can be the same or different and represent O or NR, wherein R stands for H or C₁-C₆-alkyl,
R1, R2, R5, and R6 each may be the same or different and represent a substituted or unsubstituted hydrocarbon residue with 1 to 10 carbon atoms, and
R3 and R4 each may be the same or different and represent (CH₂)ₚ, wherein p stands for an integer of 2 to 12 or for a -[CH₂CH₂O]ₙ-CH₂CH₂- group, wherein n is between 1 and 40,
wherein L stands for a divalent residue, which is selected from the group consisting of
-(CH₂)ₚ-, wherein p is between 1 and 12,
-CH₂-CH(OH)-CH₂- and -[CH₂CH₂O]_{q}-CH₂CH₂-, wherein q is between 1 and 40;
wherein the single units A may be the same or different,
wherein the single residues L may be the same or different,
wherein n represents an integer and n > 0,
wherein the polymer chain has units A at both ends, and
wherein the polymer is obtainable by reacting one or more diamino compound(s) of formula III with one or more compound(s) of the following formula VIII,
P-L-Q (VIII)
wherein L has the same meaning as in formula I and wherein P and Q each may be the same or different and represent halogens such as Cl, Br and I or OMs (mesylate), OTf (triflate), ONf (nonaflate), or OTs (tosylate), and
wherein the ratio (n_{A} : n_{B}) of the total amount of substance used of the compound(s) of formulae II to VII (n_{A}) to the total amount of substance of the compound(s) of formula VIII (n_{B}) is at least 1.1 : 1.

13. Use of a polymer of the following formula I as brightener in an electrolyte bath for electrodeposition of a zinc or zinc alloy layer,
A -[-L-A-]ₙ-L-A (I)
wherein A represents a unit derived from a diamino compound of one of the following formulae II to VII 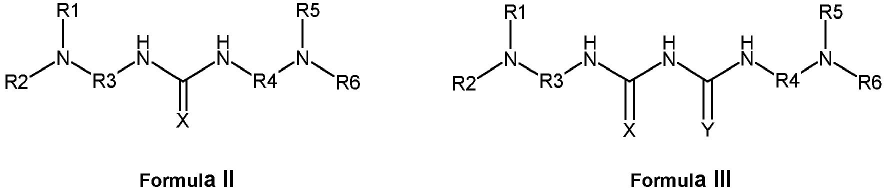 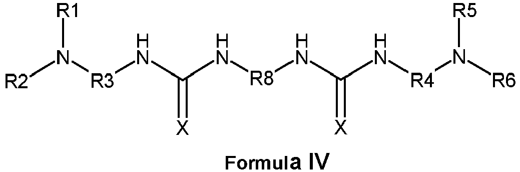 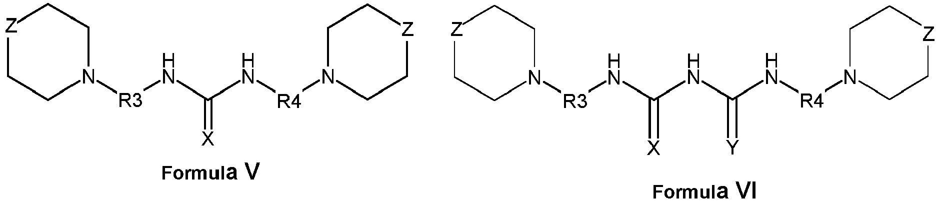 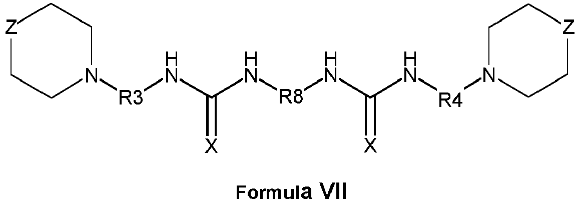
wherein
X and Y each can be the same or different and represent O or NR, wherein R stands for H or C₁-C₆-alkyl,
Z each may be the same or different and represents O or S,
R1, R2, R5, and R6 each may be the same or different and represent a substituted or unsubstituted hydrocarbon residue with 1 to 10 carbon atoms, and
R3, R4, R8 each may be the same or different and represent (CH₂)ₚ, wherein p stands for an integer of 2 to 12 or for a -[CH₂CH₂O]ₙ-CH₂CH₂- group, wherein n is between 1 and 40,
wherein L stands for a divalent residue, which is selected from the group consisting of
-(CH₂)ₚ-, wherein p is between 1 and 12,
-CH₂-CH(OH)-CH₂- and -[CH₂CH₂O]_{q}-CH₂CH₂-, wherein q is between 1 and 40;
wherein the single units A may be the same or different,
wherein the single residues L may be the same or different,
wherein n represents an integer and n > 0,
wherein the polymer chain has units A at both ends, and
wherein the polymer is obtainable by reacting one or more diamino compound(s) of formulae II to VII with one or more compound(s) of the following formula VIII,
P-L-Q (VIII)
wherein L has the same meaning as in formula I and wherein P and Q each may be the same or different and represent halogens such as Cl, Br and I or OMs (mesylate), OTf (triflate), ONf (nonaflate), or OTs (tosylate), and
wherein the ratio (n_{A} : n_{B}) of the total amount of substance used of the compound(s) of formulae II to VII (n_{A}) to the total amount of substance of the compound(s) of formula VIII (n_{B}) is at least 1.1 : 1.

14. Process for electrodeposition of glossy and planar zinc or zinc alloy coatings, comprising the steps of immersing a substrate to be coated in an electrolyte bath according to any of claims 1 to 11.

## Revendications

1. Bain électrolytique pour l'électrodéposition d'une couche de zinc ou d'alliage de zinc, le bain électrolytique contenant un polymère de formule I:
A-[-L-A-]ₙ-L-A (I)
où A représente une unité dérivée d'un composé diamino de l'une des formules suivantes II à VII: 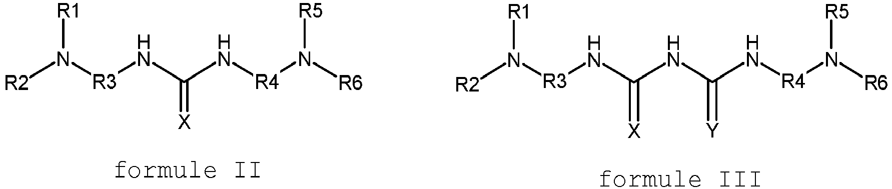 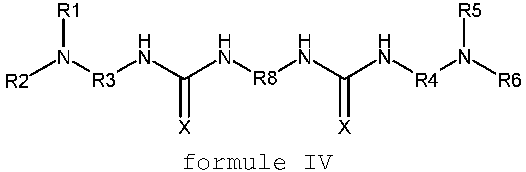 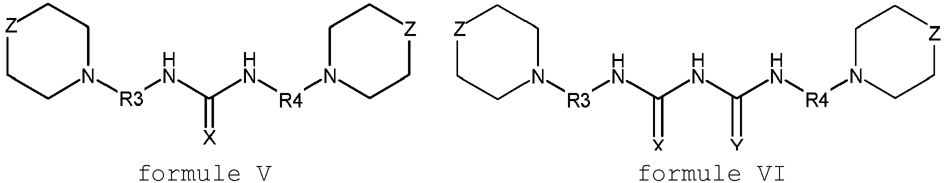 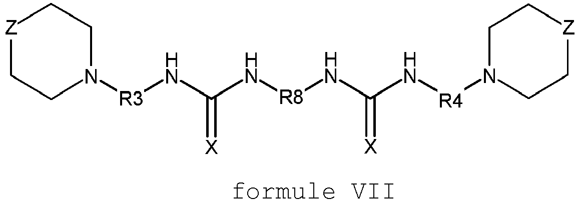
où
X et Y peuvent chacun être identiques ou différents et représentent O ou NR, où R représente H ou alkyle C₁-C₆,
Z peut chacun être identique ou différent et représente O ou S,
R1, R2, R5 et R6 peuvent chacun être identiques ou différents et représentent un radical hydrocarboné substitué ou non substitué ayant 1 à 10 atomes de carbone, et
R3, R4, R8 peuvent chacun être identiques ou différents et représentent (CH₂)ₚ, où p est un entier de 2 à 12, ou représentent un groupe -[CH₂CH₂O]ₙ-CH₂-CH₂-, où n est compris entre 1 et 40,
où L représente un radical divalent qui est choisi dans le groupe constitué de
-(CH₂)ₚ-, où p est compris entre 1 et 12,
-CH₂-CH(OH)-CH₂- et - [CH₂CH₂O]_{q}-CH₂CH₂-, où q est compris entre 1 et 40,
où les unités individuelles A peuvent être identiques ou différentes,
où les radicaux individuels L peuvent être identiques ou différents,
où n est un entier et n>0 est,
où la chaîne polymère a des unités A aux deux extrémités, et
dans lequel le polymère peut être obtenu en faisant réagir un ou plusieurs composé(s) diamino des formules II à VII avec un ou plusieurs composé(s) de formule suivante VIII
P - L - Q (VIII)
où L a la même signification que dans la formule I, et où P et Q peuvent chacun être identiques ou différents et représentent des halogènes tels que Cl, Br et J, ou Oms (mésylate), OTf (triflate), ONf (nonaflate) ou OTs (tosylate), et
où le rapport (n_{A}:n_{B}) entre la quantité totale de matière du composé (des composés) des formules II à VII (n_{A}) qui est utilisée, et la quantité totale de matière du composé (des composés) de formule VIII (n_{B}), qui est utilisée, est d'au moins 1,1:1.

2. Bain électrolytique selon la revendication 1, dans lequel R1, R2, R5 et R6 peuvent chacun être identiques ou différents et représentent le méthyle, l'éthyle, l'hydroxyéthyle ou le groupe -CH₂CH₂(OCH₂CH₂)_{y}-OH, où y est compris entre 0 et 4.

3. Bain électrolytique selon la revendication 1 ou 2, dans lequel R3, R4, R8 peuvent chacun être identiques ou différents et représentent le groupe éthylène, le groupe propylène, le groupe -(CH₂)₂-O-(CH₂)₂- ou le groupe -(CH₂)₂-O-(CH₂)₂-O-(CH₂)₂-.

4. Bain électrolytique selon la revendication 1, 2 ou 3, dans lequel L représente un radical divalent qui est choisi dans le groupe constitué de -(CH₂)ₚ-, où p est compris entre 2 et 4, -(CH₂)₂-O-(CH₂)₂- et -(CH₂)₂-O-(CH₂)₂-O-(CH₂)₂-.

5. Bain électrolytique selon la revendication 1, dans lequel le rapport n_{A}:n_{B} est d'au moins 1,3:1.

6. Bain électrolytique selon l'une des revendications 1 à 5, dans lequel le polymère de formule I n'a pas d'halogène lié organiquement.

7. Bain électrolytique selon l'une des revendications 1 à 6, dans lequel le polymère de formule I a un poids moléculaire d'au moins 500 g/mol.

8. Bain électrolytique selon l'une des revendications 1 à 7, dans lequel le polymère de formule I est contenu en une quantité de 0,01 à 50 g/l.

9. Bain électrolytique selon l'une des revendications 1 à 8, dans lequel des ions halogénures ont été ajoutés au polymère de formule I.

10. Bain électrolytique selon la revendication 9, dans lequel d'addition des ions halogénures est effectuée en ajoutent les acides minéraux correspondants, par quaternisation des groupes amino tertiaires terminaux avec des halogénures d'alkyle correspondants ou en ajoutant des halogénures de métaux alcalins, de métaux alcalino-terreux, de zinc ou d'ammonium.

11. Bain électrolytique selon la revendication 9 ou 10, dans lequel le polymère de formule I a été acidifié avec environ 2 équivalents d'acide chlorhydrique par équivalent de polymère.

12. Polymère de formule suivante I
A-[-L-A-]ₙ-L-A
où A représente une unité dérivée d'un composé diamino de formule suivante III 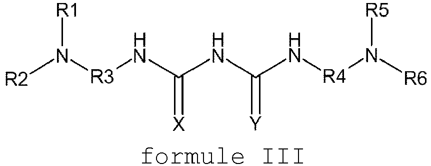
où
X et Y peuvent chacun être identiques ou différents et représentent O ou NR, où R représente H ou alkyle C₁-C₆,
R1, R2, R5 et R6 peuvent chacun être identiques ou différents et représentent un radical hydrocarboné substitué ou non substitué ayant 1 à 10 atomes de carbone, et
R3 et R4 peuvent chacun être identiques ou différents et représentent (CH₂)ₚ, où p est un entier de 2 à 12, ou représentent un groupe -[CH₂CH₂O]ₙ-CH₂-CH₂-, où n est compris entre 1 et 40,
où L représente un radical divalent qui est choisi dans le groupe constitué de
-(CH₂)ₚ-, où p est compris entre 1 et 12,
-CH₂-CH(OH)-CH₂- et -[CH₂CH₂O]_{q}-CH₂CH₂-, où q est compris entre 1 et 40,
où les unités individuelles A peuvent être identiques ou différentes,
où les radicaux individuels L peuvent être identiques ou différents,
où n est un entier et n>0 est,
où la chaîne polymère a des unités A aux deux extrémités, et dans lequel le polymère peut être obtenu en faisant réagir un ou plusieurs composé(s) diamino de formule III avec un ou plusieurs composé(s) de formule suivante VIII
P - L - Q (VIII)
où L a la même signification que dans la formule I, et où P et Q peuvent chacun être identiques ou différents et représentent des halogènes tels que Cl, Br et J, ou Oms (mésylate), OTf (triflate), ONf (nonaflate) ou OTs (tosylate), et
où le rapport (n_{A}:n_{B}) entre la quantité totale de matière du composé (des composés) des formules II à VII (n_{A}), qui est utilisée, et la quantité totale de matière du composé (des composés) de formule VIII (n_{B}), qui est utilisée, est d'au moins 1,1:1.

13. Utilisation d'un polymère de formule suivante I comme lustrant dans un bain électrolytique pour l'électrodéposition d'une couche de zinc ou d'alliage de zinc,
A-[-L-A-]ₙ-L-A I
où A représente une unité dérivée d'un composé diamino de l'une des formules suivantes II à VII: 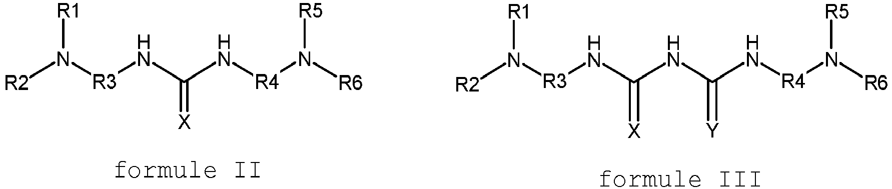 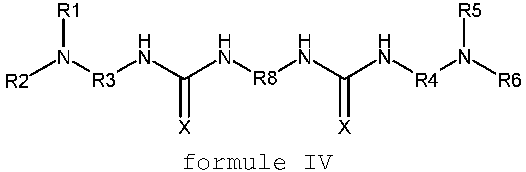 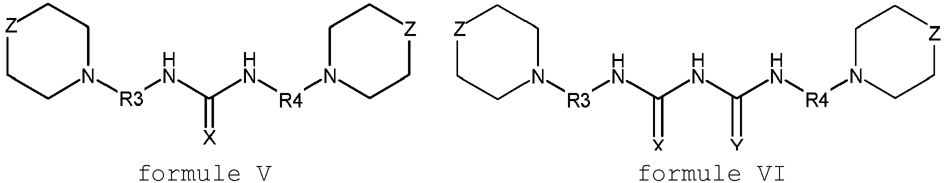 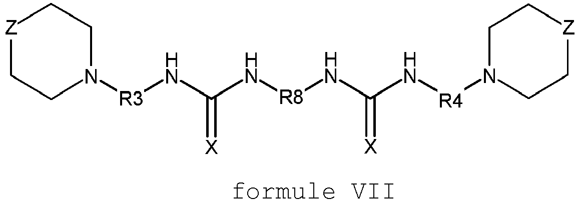
où
X et Y peuvent chacun être identiques ou différents et représentent O ou NR, où R représente H ou alkyle C₁-C₆,
Z peut chacun être identique ou différent et représente O ou S,
R1, R2, R5 et R6 peuvent chacun être identiques ou différents et représentent un radical hydrocarboné substitué ou non substitué ayant 1 à 10 atomes de carbone, et
R3, R4, R8 peuvent chacun être identiques ou différents et représentent (CH₂)ₚ, où p est un entier de 2 à 12, ou représentent un groupe -[CH₂CH₂O]ₙ-CH₂-CH₂-, où n est compris entre 1 et 40,
où L représente un radical divalent qui est choisi dans le groupe constitué de
-(CH₂)ₚ-, où p est compris entre 1 et 12,
-CH₂-CH(OH)-CH₂- et - [CH₂CH₂O]_{q}-CH₂CH₂-, où q est compris entre 1 et 40,
où les unités individuelles A peuvent être identiques ou différentes,
où les radicaux individuels L peuvent être identiques ou différents,
où n est un entier et n>0 est,
où la chaîne polymère a des unités A aux deux extrémités, et
dans lequel le polymère peut être obtenu en faisant réagir un ou plusieurs composé(s) diamino des formules II à VII avec un ou plusieurs composé(s) de formule suivante VIII
P - L - Q (VIII)
où L a la même signification que dans la formule I, et où P et Q peuvent chacun être identiques ou différents et représentent des halogènes tels que Cl, Br et J, ou Oms (mésylate), OTf (triflate), ONf (nonaflate) ou OTs (tosylate), et
où le rapport (n_{A}:n_{B}) entre la quantité totale de matière du composé (des composés) des formules II à VII (n_{A}), qui est utilisée, et la quantité totale de matière du composé (des composés) de formule VIII (n_{B}), qui est utilisée, est d'au moins 1,1:1.

14. Procédé pour l'électrodéposition de revêtements de zinc ou d'alliage de zinc brillants et plats, comprenant l'étape d'introduction d'un substrat à enduire dans un bain électrolytique selon l'une des revendications 1 à 11.
